# EUROPÄISCHE PATENTSCHRIFT

(11) **EP 0 736 718 B1**
(45) Veröffentlichungstag und Bekanntmachung des Hinweises auf die Patenterteilung: **24.06.1998**
(21) Anmeldenummer: 96105436.8
(22) Anmeldetag: 04.04.1996
(51) Int. Cl.: F16L 47/00

(54) **Anbohrarmatur für vorzugsweise unter Mediendruck stehende Versorgungsleitungen aus Kunststoff**
Tapping apparatus for plastic conduits, especially under pressure
Appareil de perçage pour conduites en matière plastique, en particulier sous pression

(30) Priorität: 04.04.1995 DE 19512591; 30.08.1995 DE 19531913
(43) Veröffentlichungstag der Anmeldung: 09.10.1996
(73) Patentinhaber: MANIBS Spezialarmaturen GmbH & Co. KG, D-42859 Remscheid (DE)
(72) Erfinder: Schafstein, Jürgen, 42859 Remscheid (DE)
(74) Vertreter: Mentzel, Norbert, Dipl.-Phys.

(56) Entgegenhaltungen:
- EP-A- 0 572 817
- DE-A- 4 304 954
- DE-A- 4 331 817
- DE-U- 9 201 976
- GB-A- 2 271 623
- US-A- 4 730 636

## Beschreibung

Die Erfindung richtet sich auf eine Anbohrarmatur der im Oberbegriff des Anspruches 1 angegebenen Art. Im nachhinein ist an bestimmten Stellen von Leitungen, die als Medium Gas oder Wasser führen, der Anschluß einer Hauseinführung zu vollziehen. Dazu muß die Leitung an dieser Stelle angebohrt werden, wofür man Anbohrarmaturen verwendet.

Die bekannte Anbohrarmatur der im Oberbegriff von Anspruch 1 genannten Art (DE 43 04 954 A1) besitzt ein Gehäuse mit einem zum Anbohren dienenden Standrohr und mit einem zum Anschluß der späteren Hauseinführung dienenden Abgangsrohr. Das Gehäuse wird mit dem Standrohr in Ausrichtung mit der anzubohrenden Stelle der Leitung befestigt. Das Standrohr besitzt ein Innengewinde, in welchem ein zylindrisches Anbohrwerkzeug verschraubbar ist. Zu seiner Verschraubung besitzt das Anbohrwerkzeug eine Aufnahme für eine Drehhandhabe, z. B. einen Steckschlüssel. Das Anbohrwerkzeug kann zugleich die Funktion eines Ventilglieds übernehmen, weil im Bereich des Unterendes vom Standrohr eine Dichtstelle angeordnet ist, die mit einer entsprechenden Gegendichtstelle am Anbohrwerkzeug zusammenwirkt, wenn dieses von der Drehhandhabe in diesen Bereich des Standrohres eingeschraubt worden ist. Diese mit Ventil-Dichtstellen und -Gegendichtstellen ausgerüsteten Anbohrarmaturen haben den Vorteil, daß unter Mediendruck stehende Versorgungsleitungen angebohrt werden können, ohne daß man aufwendige Zusatzgeräte, wie Absperrschleusen, einsetzen, montieren und betätigen muß.

Der Nachteil dieser bekannten Anbohrarmaturen ist, daß diese nach ihrer Benutzung nicht ohne weiteres von außen wieder betätigt werden können, um durch Verschrauben des Anbohrwerkzeugs den Medienfluß zum Abgangsrohr zu drosseln oder ganz zu verschließen. Nach ihrer Benutzung wird nämlich das Standrohr an seinem Ende mit einem Stopfen und ggf. mit einer Endkappe verschlossen und die ganze Anbohrarmatur mit Erdreich überdeckt. Das im Standrohr verbliebene Anbohrwerkzeug ist dann von außen nicht betätigbar. Man kann es nur von innen betätigen, wenn man es ausgegraben und den Stopfen sowie die Endkappe entfernt hat.

Wenn eine Betätigung von außen erwünscht ist, muß man zu Armaturen ganz anderer Type greifen, nämlich sogenannte Ventil-Anbohrarmaturen. Die bekannten Ventil-Anbohrarmaturen (DE 42 17 982 C2) bestehen aus einem zweiteiligen, aus Ober- und Untergehäuse bestehenden Ventilgehäuse, dessen Untergehäuse ein Innengewinde zum Verschrauben eines zylindrischen Anbohrwerkzeugs besitzt. Das Anbohrwerkzeug ist am unteren Ende einer Spindel befestigt. Die Spindel ist im Obergehäuse sowohl längsverschieblich als auch drehbar gelagert. Das Anbohrwerkzeug bildet zugleich das Ventilglied. Das aus dem Obergehäuse herausragende Spindelende kann auch nach seiner Abdeckung mit Erdreich von der Erdoberfläche aus nachträglich bedient werden, z. B. über eine Schlüsselstange, um einen vom Untergehäuse abragenden Abgang zu drosseln, zu verschließen oder wieder zu öffnen.

Im Stand der Technik war es bisher erforderlich, beide Typen von Armaturen gesondert herzustellen, auf Lager zu halten und, entsprechend dem jeweiligen Anwendungsfall, zu benutzen. Je nach Bedarf mußte die eine oder die andere Armatur-Type vom Kunden beim Hersteller bestellt und eingebaut werden. Dies erforderte eine sorgsame Planung, die nicht langfristig getroffen werden konnte. Oft ist es im voraus nicht abschätzbar, welche der beiden Typen man braucht. Außerdem kommt es vor, daß im nachhinein eine Anbohrarmatur durch eine Ventil-Anbohrarmatur ersetzt werden muß, weil sich die Betriebsbedingungen geändert haben. Es gibt nämlich Vorschriften, wonach bei Überschreiten eines bestimmten Betriebsdrucks oder bestimmter Querschnittsmaße Ventil-Anbohrarmaturen eingebaut werden müssen. All dies ist im voraus nicht zu übersehen, weshalb der Kunde, um späteren Problemen aus dem Weg zu gehen, vorsichtshalber die aufwendigeren Ventil-Anbohrarmaturen bestellte und einbaute, auch wenn er später, rückschauend, mit den wesentlich billigeren einfachen Anbohrarmaturen ausgekommen wäre.

Der Erfindung liegt die Aufgabe zugrunde, den Aufwand bei der Herstellung, Lagerhaltung und Verarbeitung von Armaturen beider Typen preiswerter zu gestalten. Ferner liegt der Erfindung die Aufgabe zugrunde, eine einfache, zuverlässig bedienbare Anbohrarmatur zu entwickeln, die ein präzises Anbohren gestattet und sich durch zuverlässige Medienabdichtung auszeichnet. Dies wird erfindungsgemäß durch die im Anspruch 1 angeführten Maßnahmen erreicht, denen folgende besondere Bedeutung zukommt.

Die Erfindung verwendet sowohl für einfache Anbohrarmaturen als auch für die aufwendigeren Ventil-Anbohrarmaturen dasselbe Basisteil, nämlich das Gehäuse der einfachen Anbohrarmatur, welches ein Standrohr und ein Abgangsrohr aufweist. Eine solche Anbohrarmatur kann nämlich durch die Erfindung bedarfsweise jederzeit in eine Ventil-Anbohrarmatur umgewandelt werden. Das kann auch nachträglich, nach dem Setzen der einfachen Anbohrarmatur an der Leitung, geschehen. Man benötigt hierfür zunächst einen vormontierten Ventilaufsatz, der aus einer Kappe mit einer darin axialfest drehgelagerten, von außen betätigbaren Spindel besteht. Wenn eine Umwandlung in eine Ventil-Anbohrarmatur erwünscht ist, braucht diese Kappe lediglich am Gehäuse der Anbohrarmatur einmal befestigt zu werden. Man benötigt hierfür ferner einen Adapter, welcher im Übergang zwischen der einfachen Anbohrarmatur und dem Ventilaufsatz montiert wird. Auf Seiten des Ventilaufsatzes wird der Adapter drehfest, aber längsverschieblich mit der Spindel verbunden, was durch einfaches Ineineinderstecken erfolgen kann. Auf Seiten des Anbohrwerkzeugs ist der Adapter mit einer Kupplung versehen, die komplementär zur Aufnahme im Anbohrwerkzeug komplementär gestaltet ist und ein Drehmoment zu übertragen gestattet.

Weil durch die Erfindung für beide Armaturtypen einheitliche Basisteile verwendet werden können, lassen sich diese in wesentlich höherer Stückzahl und damit besonders preiswert herstellen. Außerdem ist die Lagerhaltung der beiden Armaturtypen gegenüber dem Stand der Technik wesentlich vereinfacht und übersichtlicher gemacht. Man benötigt lediglich lose Ventilaufsätze mit Adaptern, die im übrigen auch als Baueinheit unverlierbar miteinander vormontiert sein können. Weder der Hersteller noch der Kunde brauchen über weite Zeiträume zu planen. Weil in jedem Fall das Basisteil erforderlich ist, braucht zunächst nur dieses bestellt zu werden. Nur in jenen Fällen, wo von vorneherein oder nachträglich eine Ventil-Anbohrarmatur erforderlich ist, brauchen lediglich die Ventilaufsätze mit Adaptern bestellt und montiert zu werden. Diese Montage braucht dabei nicht vom Hersteller aus zu erfolgen, sondern kann später jederzeit auch vom Kunden ausgeführt werden. Durch entsprechende Demontage läßt sich im übrigen eine Ventil-Anbohrarmatur wieder in eine einfache Anbohrarmatur rückverwandeln, was auch nachträglich erfolgen kann.

Bei der Erfindung wird der ganze, unterhalb des Innengewindes liegende Abschnitt des Bohrstutzens von einer Stützbuchse eingefaßt, welche zu einer umfangsseitigen Führung eines entsprechend langen Mantelabschnitts des Schneidwerkzeugs sorgt. Diese Stützbuchse besteht aus formsteifem Material, wie Messing, welche ein aus Kunststoff bestehendes Gehäuse in diesem Bereich verstärkt. Die Position des Schneidwerkzeugs ist durch die Stützbuchse in dem entscheidenden, zum anzubohrenden Rohr weisenden Bereich des Bohrstutzens stabilisiert. Das gleitgeführte Schneidwerkzeug wird präzise bis zur Anbohrstelle herangeführt und während des ganzen Bohrvorgangs allseitig abgestützt. Es wird stets für eine zuverlässige Anbohrung gesorgt.

Weitere Maßnahmen und Vorteile der Erfindung ergeben sich aus den weiteren Ansprüchen, der nachfolgenden Beschreibung und den Zeichnungen. In den Zeichnungen ist die Erfindung in mehreren Ausführungsbeispielen dargestellt. Es zeigen:
- Fig. 1: einen Axialschnitt durch eine komplette Ventil-Anbohrarmatur nach der Erfindung, die an einer noch anzubohrenden Versorgungsleitung angebracht ist, wobei die Schnittführung in einer Querschnittsebene der Leitung liegt,
- Fig. 2: die in Fig. 1 gezeigte Ventil-Anbohrarmatur nach Vollzug des Anbohrens der Versorgungsleitung, wobei eine Absperrfunktion an der Bohrstelle sich ergibt,
- Fig. 3: in Vergrößerung ein in Fig. 2 mit III gekennzeichnetes Detail der Armatur,
- Fig. 4: in Vergrößerung ein in Fig. 2 mit IV gekennzeichnetes Detail der Armatur,
- Fig. 5: in Vergrößerung einen kompletten Horizontalschnitt durch die in Fig. 4 gezeigten inneren Bauteile längs der dort angedeuteten Schnittlinie V,
- Fig. 6,: ebenfalls im Axialschnitt, eine mit dem Ventil-Untergehäuse von Fig. 1 erzeugte einfache Anbohrarmatur mit einer strichpunktierten Drehhandhabe in einer der Fig. 1 entsprechenden Schnittführung,
- Fig. 7: die in Fig. 4 gezeigte Anbohrarmatur mit eingesetzten Stopfen, nachdem diese ergänzend noch mit einer Endkappe versehen worden ist,
- Fig. 8: in einer Fig. 7 entsprechenden Darstellung eine alternative Ausbildung der Anbohrarmatur,
- Fig. 9: eine weitere alternative Gestaltung einer Anbohrarmatur, zwar auch im Axialschnitt, aber die Schnittführung in einer zu Fig. 6 senkrechten Ebene, nämlich längsparallel zu einer dort nicht mitgezeichneten Versorgungsleitung, liegt,
- Fig. 10: eine Draufsicht auf die Anbohrarmatur von Fig. 1 mit angeformtem Schellenteil,
- Fig. 11: in Vergrößerung einen Längsschnitt durch eine alternative Ausgestaltung eines bereits in Fig. 1 gezeigten Adapters der Ventil-Anbohrarmatur,
- Fig. 12: einen Querschnitt durch den Adapter von Fig. 11 längs der dortigen Schnittlinie XII-XII,
- Fig. 13: den in Fig. 12 gezeigten Querschnitt, worin die dort erzielbare Wirkung einer Drehüberlastsperre erläutert ist,
- Fig. 14: einen Längsschnitt durch eine alternative Ausgestaltung eines metallischen Einsatzes im Gehäuse der Anbohrarmatur,
- Fig. 15: einen Querschnitt durch das anzubohrende Rohr mit einer daran angebrachten Anbohrarmatur einer ersten Ausführung in einem in der gleichen Ebene liegenden Längsschnitt des Gehäuses, wo das Schneidwerkzeug, jeweils im Halbschnitt gesehen, in zwei unterschiedlichen Positionen dargestellt ist,
- Fig. 16: einen horizontalen Axialschnitt durch ein Teilstück eines anzubohrenden Rohres mit einer daran befestigten Anbohrarmatur, deren Gehäuse in der gleichen Ebene geschnitten ist und das Schneidwerkzeug, jeweils im Halbschnitt dargestellt, in zwei unterschiedlichen Positionen zeigt,
- Fig. 17 und 18: Längsschnitte durch das Anbohrwerkzeug in zwei alternativen Ausführungen,
- Fig. 19: einen der Fig. 14 entsprechenden Längsschnitt durch den metallischen Einsatz im Gehäuse und
- Fig. 20: die Draufsicht auf den in Fig. 19 gezeigten metallischen Einsatz.

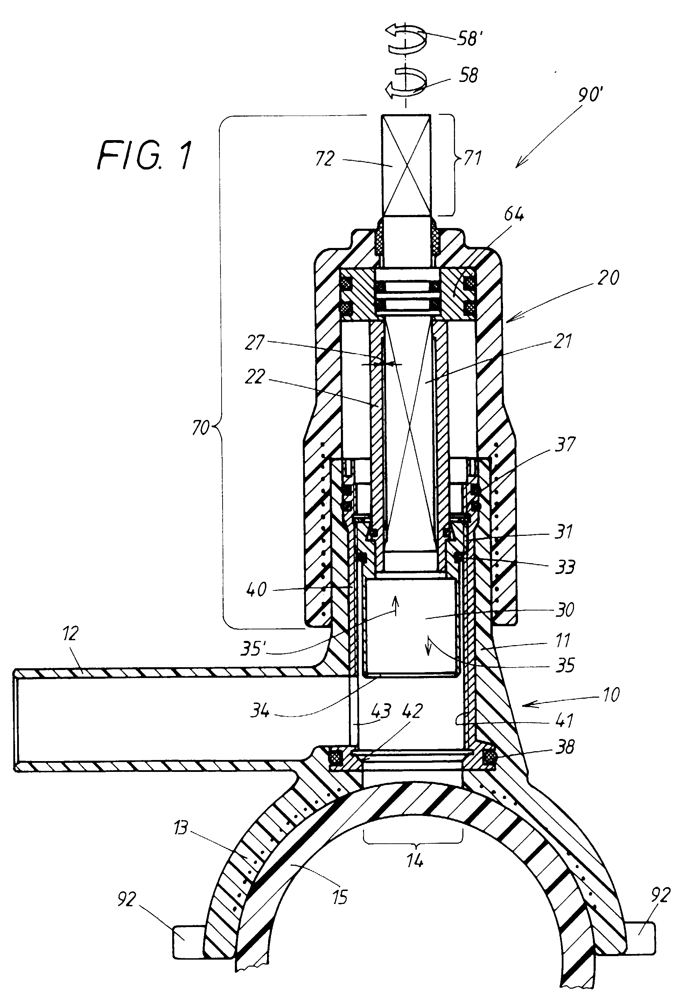

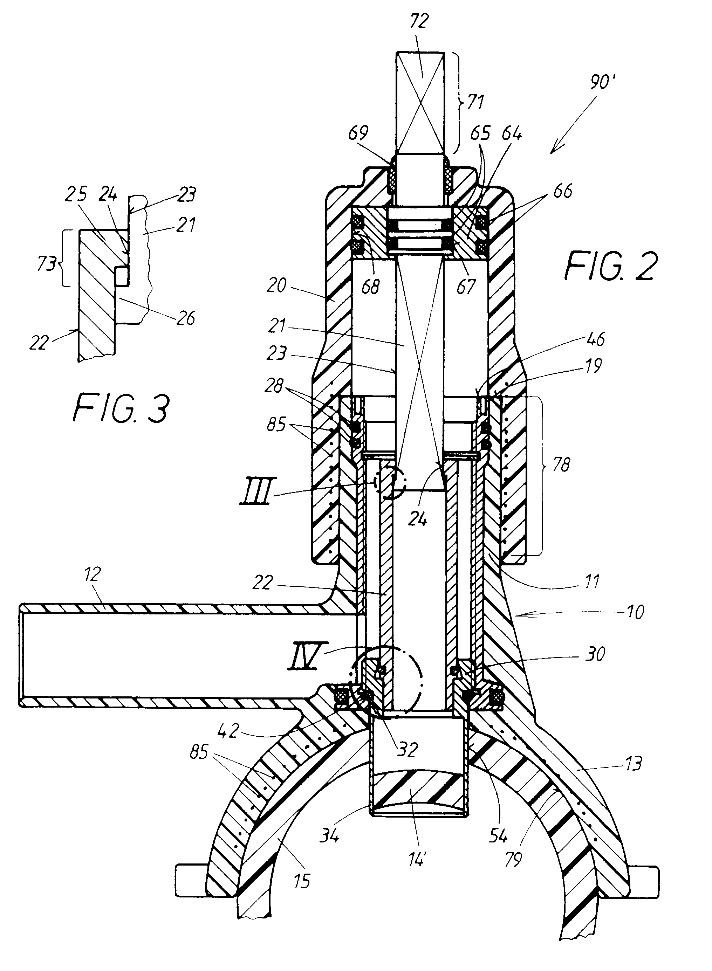

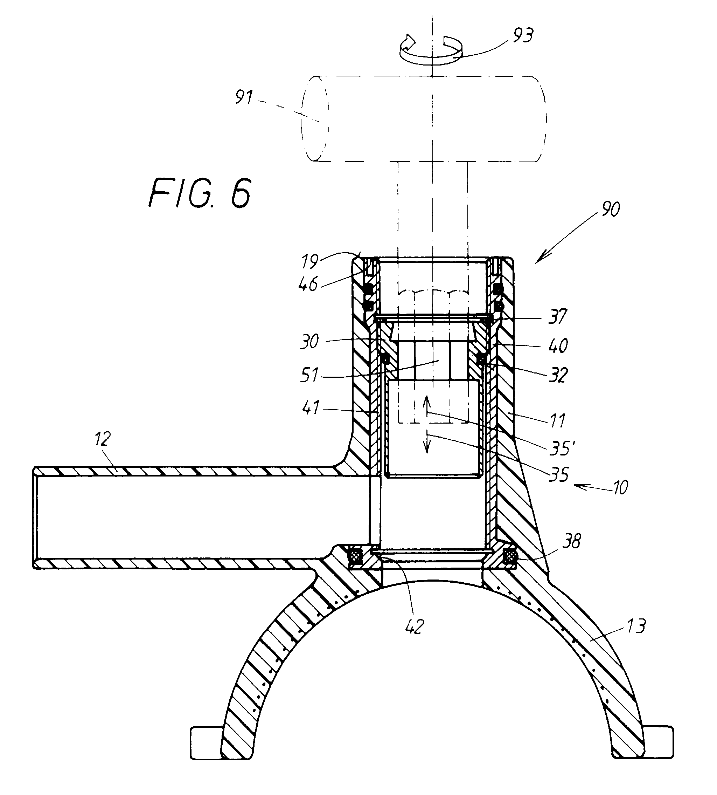

Die in Fig. 1 und 2 gezeigte Ventil-Anbohrarmatur 90' umfaßt ein zweiteiliges Ventilgehäuse 10, 20, nämlich ein Gehäuse 10 einer in Fig. 6 gezeigten einfachen Anbohrarmatur 90, die später beschrieben wird, und ein von einer Kappe 20 gebildetes Obergehäuse. Das Gehäuse 10 soll daher gleich "Untergehäuse" bezeichnet werden. Das Untergehäuse 10 umfaßt ein Standrohr 11 mit einem davon abgezweigten Abgangsrohr 12. Beide Rohre 11, 12 sitzen an einem Schellenteil 13 und bestehen einstückig aus thermisch schweißbarem Kunststoff. Der Schellenteil 13 wird über der anzubohrenden Stelle 14 einer ebenfalls aus Kunststoff bestehenden Versorgungsleitung 15 aufgesetzt, die unter Druck stehende Medien führt. Ziel dieser Ventil-Anbohrarmatur 90' ist es, nicht nur diese Medien aus der Leitung 15 in das Abgangsrohr 12 zu leiten, wozu die Anbohrung an der Stelle 14 gemäß Fig. 2 ausgeführt wird, sondern auch, beim späteren Gebrauch, diesen Medienzufluß, von außen her, ventilartig zu drosseln, ganz abzusperren oder wieder zu öffnen.

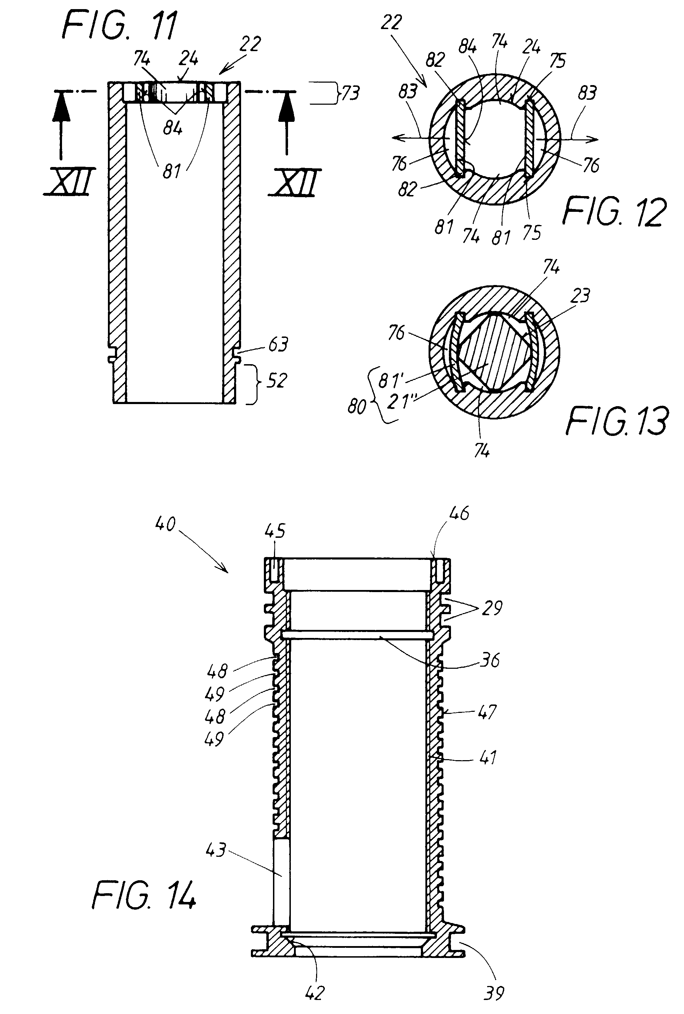

Dazu verwendet man ein Anbohrwerkzeug 30, welches in einem im Standrohr 11 vorgesehenen Innengewinde 41 axial verschraubbar ist und bereits Bestandteil der Armatur 90 von Fig. 6 ist. Dazu dient im Ausführungsbeispiel von Fig. 1 und 6 eine einstückige, metallische Gewindehülse 40, die vom Kunststoffmaterial des Standrohres 11 umspritzt ist. Alternativ könnte man eine solche Hülse 40 auch in das Kunststoffmaterial axial eindrücken. Aus der in Fig. 14 ersichtlichen Einzelansicht ist das Aussehen einer solchen Gewindehülse 40 zu entnehmen, die allerdings gegenüber dem Ausführungsbeispiel von Fig. 1 und 2 modifiziert ist.

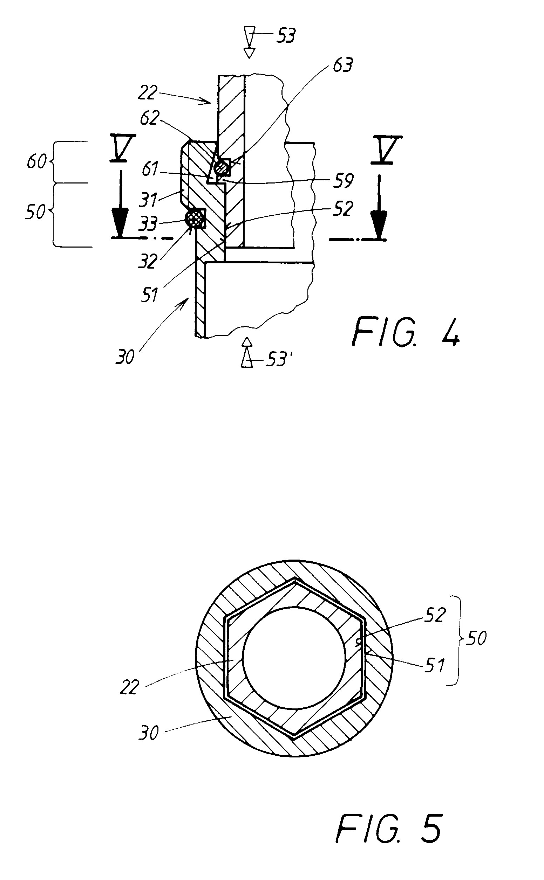

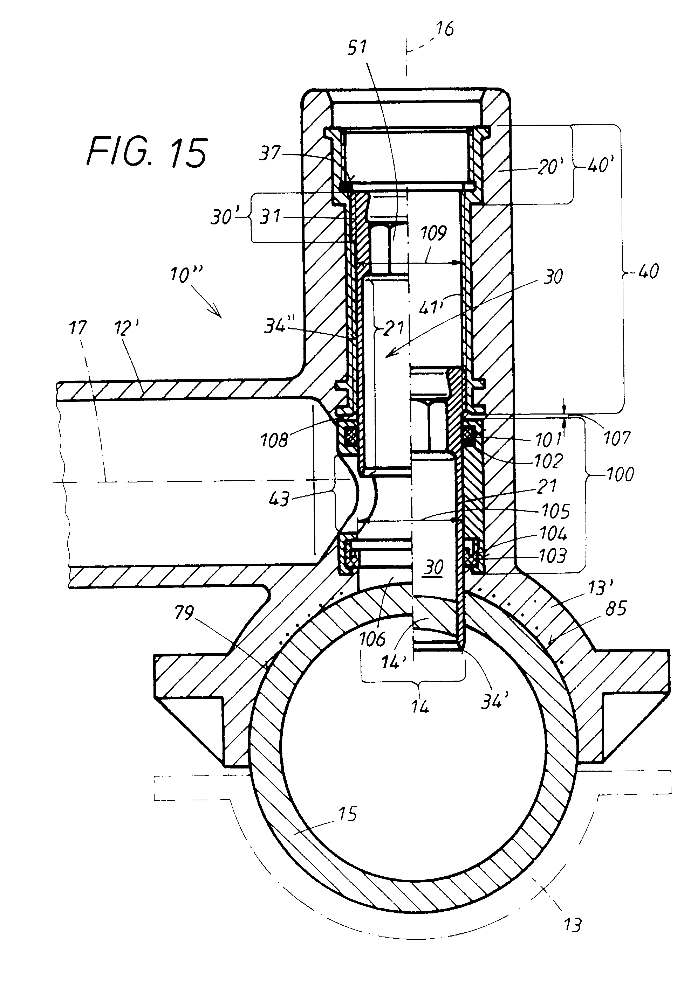

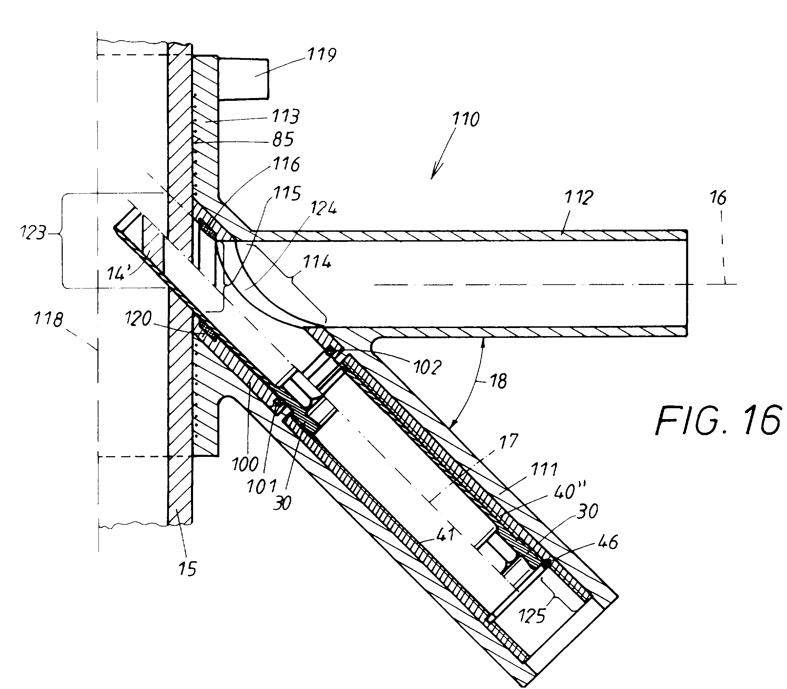

Die Gewindehülse 40 besteht aus Messing und besitzt in ihrem Hülseninneren das zum Verschrauben des ebenfalls aus Messing bestehenden Anbohrwerkzeugs 30 erforderliche Innengewinde 41. Dementsprechend umfaßt das Anbohrwerkzeug einen Gewindeabschnitt 31 mit einem ins Innengewinde 41 eingreifenden Umfangsgewinde, wie aus Fig. 4 hervorgeht. An ihrem unteren Ende besitzt die Gewindehülse 40 eine Ventil-Dichtstelle 42, mit welchem ein am Anbohrwerkzeug 30 vorgesehene Ventil-Gegendichtstelle 32 zusammenwirkt. Im Ausführungsbeispiel von Fig. 1 und 6 besteht die Dichtstelle aus einem Ventilsitz 42 und die Gegen-Dichtstelle aus einem Ventilteller 32, der durch einen schrägen Absatz zwischen dem Umfangsgewindeabschnitt 31 und einem zylindrischen Schneidmesser 34 entsteht und eine Ringdichtung 33 trägt. Eine andere Möglichkeit besteht darin, die Dichtstelle im Standrohr 11 durch einen dort gelagerten elastischen O-Ring zu erzeugen, wie das in Fig. 15 und 16 gezeigt ist. Anstelle des O-Rings könnte eine mit dem Kunststoffmaterial des Standrohres 11 erzeugte Lippe verwendet werden. Solche mit der Zylinderfläche 33 des Anbohrwerkzeugs 30 zusammenwirkenden O-Ringe können alternativ aus einer Lippe bestehen, die in sehr preiswerter Weise einstückig aus dem Kunststoffmaterial des Standrohres 11 geformt ist. Ein zusätzlicher O-Ring könnte auch oberhalb einer Querbohrung 43 der Hülse 40 vorgesehen sein, um im oberen Bereich des Standrohres 11 Dichtwirkungen zu erzielen. Die Querbohrung 43 ist mit der Rohröffnung des angeformten Abgangsrohres 12 ausgerichtet.

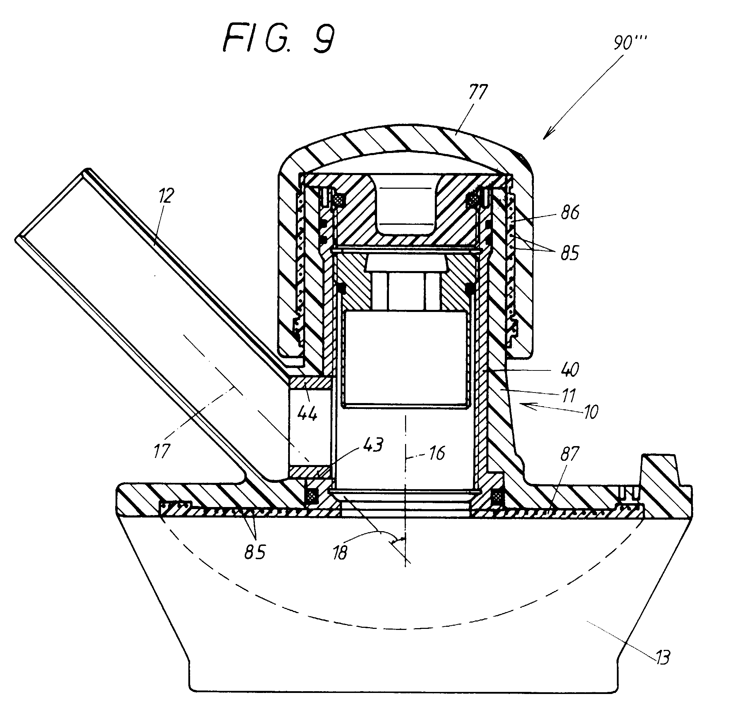

Wie eine Variante der einfachen Anbohrarmatur 90"' von Fig. 9 erkennen läßt, kann in der Querbohrung 43 auch ein seitlicher Rohransatz 44 sitzen, der nach dem Umspritzen im Kunststoffmaterial der Rohrwand des Standrohres eingebettet ist und zur guten Anformung des dort geneigt verlaufenden Abgangsrohres 12 dient. Wie aus Fig. 9 ersichtlich, schließt die Achse 16 des Standrohres 11 einen Neigungswinkel 18 mit der entsprechenden Achse 17 des Abgangsrohres 12 ein. Wie ein Vergleich zwischen Fig. 6 und 9 lehrt, ist es dadurch möglich, das Abgangsrohr 12 auch in einer beliebigen anderen Ebene zum Standrohr 11 verlaufen zu lassen. Statt in der in Fig. 6 bzw. 1 erkennbaren Radialebene bezüglich der Achse der Versorgungsleitung 15 kann das Abgangsrohr 12 z. B. in einer längsparallel zur Verlaufsrichtung der Versorgungsleitung 15 liegenden Axialebene gemäß Fig. 9 angeordnet sein. Außerdem ist es vorteilhaft, die Armatur 10 von Fig. 9 mit ihrem Standrohr 11 und vor allem dem Abgangsrohr 12 nicht vertikal über, sondern horizontal neben der Versorgungsleitung 15 von Fig. 1 anzuordnen. Dann liegen nämlich die Anschlüsse am Abgangsrohr 12 nicht oberhalb der Leitung 15, sondern neben dieser, vorzugsweise in der gleichen Horizontalebene wie die Leitung 15.

Als Positionshilfe beim Einlegen der Gewindehülse 40 in das zur Herstellung des Untergehäuses 10 dienende Formwerkzeug können an der aus Fig. 14 erkennbaren oberen Hülsen-Stirnfläche 46 Zentrierbohrungen 45 vorgesehen sein. Damit sich die Hülse 40 im Kunststoffmaterial des Standrohres 11 gut verkrallen kann, ist eine Längsprofilierung 47 am Hülsenumfang vorgesehen. Diese besteht im vorliegenden Fall aus Wendelstegen, die durch zwei zueinander gegenläufige Umfangsgewinde 48, 49 erzeugt werden. An dem Ventilsitz 42 benachbarten Bereich, ist, ausweislich der Fig. 14, eine Umfangsnut 39 vorgesehen, welche zur Aufnahme eines Dichtrings 38 gemäß Fig. 6 dient. Der Dichtring 38 liegt an der entsprechend profilierten Innenfläche des Standrohres 11 dichtwirksam an. Ferner besitzt die Gewindehülse 40 eine in Fig. 1 wirksame Innenschulter 37. Diese entsteht in allen Ausfuhrungsbeispielen, wie Fig. 14 zeigt, durch eine im Hülseninneren vorgesehene Innennut 36, in welcher dann ein die Innenschulter erzeugender Sprengring 37 aufgenommen ist. Dieser Sprengring 37 hat die Aufgabe, als obere Begrenzung für die in Fig. 1 durch den Pfeil 35' verdeutlichte Hochschraubbewegung des Anbohrwerkzeugs 30 zu dienen. Die nach unten gerichtete Schraubbewegung ist in Fig. 1 durch den Pfeil 35 veranschaulicht.

Nach dem Umspritzen des Kunststoffs vom Untergehäuse 11 liegt, wie am besten aus Fig. 6 hervorgeht, die erwähnte Hülsen-Stirnfläche 46 bündig mit dem oberen Stirnende 19 des dabei erzeugten Standrohres 11. In diesem oberen Bereich kann, wie aus Fig. 14 zu ersehen ist, die Gewindehülse 40 noch mit zwei weiteren Umfangsnuten 29 versehen sein, die zur Aufnahme von aus Fig. 2 erkennbaren Ringdichtungen 28 dienen. Diese Ringdichtungen 28 wirken mit der Innenfläche des dort entsprechend profilierten Standrohres 11 dichtwirksam zusammen.

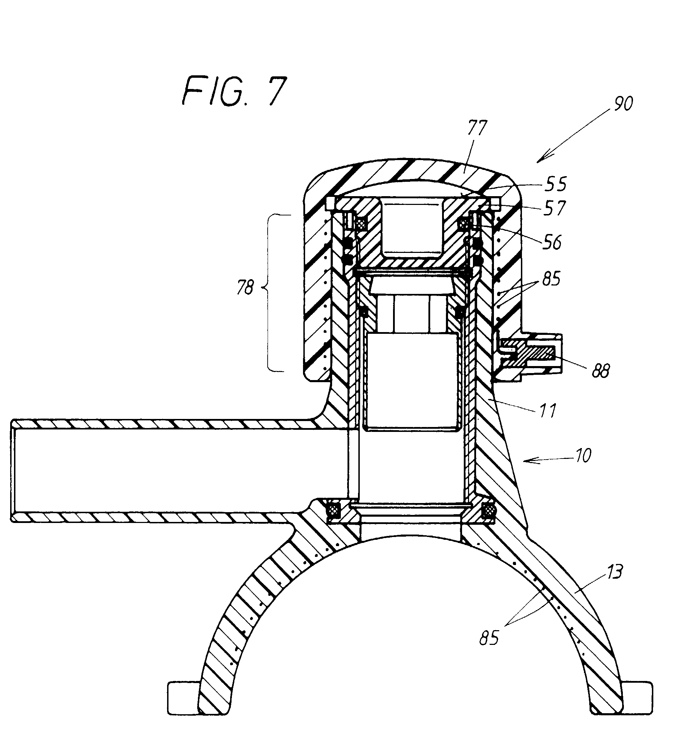

Das Untergehäuse 10 ermöglicht, wie ein Vergleich zwischen Fig. 1 und 6 zeigt, die bereits erwähnte doppelte Verwendung, nämlich als Ventil-Anbohrarmatur 90', gemäß Fig. 1, oder als einfache, unmittelbar über eine Drehhandhabe zu bedienende Anbohrarmatur 90 von Fig. 6. Im Falle der Fig. 6 besitzt das Anbohrwerkzeug 30 eine unrund profilierte Aufnahme 51, in welche eine in Fig. 6 strichpunktiert angedeutete Drehhandhabe eingesteckt wird. Die Drehhandhabe 91 besteht aus einem einfachen Steckschlüssel, der bei einer Drehung im Sinne des dortigen Drehpfeils 93 das Anbohrwerkzeug 30 im Abwärtssinne gemäß dem Pfeil 35 verschraubt. Beim Abwärtsschrauben 35 wird schließlich, analog zum Ventil-Anbohrgerät 90' in Fig. 2, ein Bohrloch 54 in die aus Fig. 2 ersichtliche Versorgungsleitung 15 geschnitten, wobei ein Bohrkern 14' im Inneren des zylindrischen Schneidmessers 34 stehen bleibt. In Fig. 6 ist die Anschlaglage des Anbohrwerkzeugs 30 an der Innenschulter 37 beim Aufwärtsschrauben 35' veranschaulicht. In diesem Fall kann dann ein Stopfen 55 gemäß Fig. 7 in den oberhalb der Innenschulter 37 befindlichen Bereich des Innengewindes 41 der Hülse 40 eingeschraubt werden. Dabei kann am Stopfenumfang eine Ringdichtung 56 eingelassen sein, die an der Hülseninnenfläche dichtwirksam wird. Zweckmäßigerweise besitzt der Stopfen 55 auch noch einen Endflansch 57, der am Stirnende 19 des Standrohres 11 bzw. der Hülsenstirnfläche 46 anschlägt.

Bei Umwandlung der Armatur 90 von Fig. 6 in eine Ventil-Anbohrarmatur von Fig. 1 ist lediglich der Ventilaufsatz 70 erforderlich, der aus dem als Kappe 20 ausgebildeten Obergehäuse und einer darin axialfest drehgelagerten Spindel 21 besteht. Dazu dient ein Lagerring 64, der vom Kunststoffmaterial der Kappe 20 gleich mitumspritzt ist. Wie aus Fig. 2 hervorgeht, sind zweckmäßigerweise doppelte Ringdichtungen 65 in Umfangsnuten einer abgesetzten Axialzone des oberen Spindelglieds 21 angeordnet, welche an der Ringinnenfläche 67 des Lagerrings 64 dichtwirksam sind. In analoger Weise sind in Umfangsnuten der Ringumfangsfläche 68 in entsprechenden Umfangsnuten zwei Ringdichtungen 66 angeordnet, die mit der Innenfläche der Kappe 20 dichtungswirksam sind. Der Ventilaufsatz 70 ist vormontiert.

Zur Umwandlung der Anbohrarmatur 90 von Fig. 6 in die Ventil-Anbohrarmatur 90' von Fig. 1 bis 5 ist schließlich noch ein Adapter 22 erforderlich, der als Verbindungsstück zwischen der Spindel 21 und dem Anbohrwerkzeug 30 dient. Der Adapter 22 ist zwar drehfest, aber längsverschieblich mit der Spindel 21 verbindbar und besitzt an seinem unteren Ende einer zur vorerwähnten Aufnahme 51 im Anbohrwerkzeug 30 komplementäre Kupplung 52, die lösbar ist und eine ein Drehmoment übertragende Verbindung 50, gemäß Fig. 4, erzeugt. Im vorliegenden Ausführungsbeispiel liegt folgende Besonderheit vor.

Die Spindel 21 besteht aus einem massiven Schaft. Der Adapter 22 ist als Buchse ausgebildet, der die Spindel 21 bereichsweise ummantelt. Das Schaftprofil 23 ist im vorliegenden Fall ein Vierkant und der Buchsenquerschnitt 24 eine Vierkantöffnung.

Wie aus Fig. 1 zu erkennen ist, liegt, zwecks guter Axialverschieblichkeit, zwischen dem Schaftprofil 23 und dem Buchsenquerschnitt 24 ein freier Spalt 27 vor. Für die Drehmomentübertragung genügt, wie am besten aus Fig. 3 zu erkennen ist, eine Flächenberührung im oberen Endstück 25 der Buchse 22. Es reicht aus, den vierkantigen Öffnungsquerschnitt 24 in diesem verengten Buchsenendstück 25 anzuordnen. Eine Unverlierbarkeit der beiden zueinander längsverschieblichen Glieder 21, 22 läßt sich durch die ebenfalls aus Fig. 3 ersichtlichen Endanschläge erreichen, die zwischen dem erwähnten verengten Buchsen-Endstück 25 und einer durch axiales Stauchen erzeugten Radialverbreiterung 26 am Schaftende entstehen. Diese Endanschläge können aber auch fehlen. Damit ist der Adapter 22 sogar unverlierbar mit der Spindel 21 verbunden und bildet eine Baueinheit mit dem vorbeschriebenen Ventilaufsatz 70.

Die Spindel 21 ragt mit einem Endstück 71 aus einer Axialbohrung in der Decke der Kappe 20 heraus und kann dort von einer elastischen Dichtungsmanschette 69 umschlossen sein. Das Endstück 71 besitzt eine unrund profilierte Angriffsfläche 72 für ein Drehwerkzeug, welches eine Drehbetätigung im Sinne der Pfeile 58, 58' von Fig. 1 ermöglicht. Bei der Drehung 58 der Spindel bewegt sich das Anbohrwerkzeug 30 im Ausschraubsinne 35 von Fig. 1 nach unten, wobei der Adapter 22 aus der Spindel 21 axial ausfährt, bis schließlich die aus Fig. 2 ersichtliche Endposition erreicht ist. Wie bereits erwähnt wurde, ist diese durch ein Anpressen des werkzeugseitigen Ventiltellers 32 am gehäuseseitigen Ventilsitz 42 gekennzeichnet. Bei der Erstbetätigung der Armatur 90' findet dabei das Ausschneiden des in Fig. 2 erkennbaren Bohrkerns 14' aus der Versorgungsleitung 15 statt. Durch entsprechende rückläufige Drehbetätigung 58' von Fig. 1 ergibt sich eine, durch den bereits erwähnten Pfeil 35' von Fig. 1 gekennzeichnete Hochschraubbewegung des Anbohrwerkzeugs 30. Dabei wird der Ventilteller 32 zunehmend vom Ventilsitz 42 entfernt und damit ein wachsender Durchlaß für das Medium aus der Versorgungsleitung 15 in das Abzweigrohr 12 ermöglicht.

Der Ventilaufsatz 70 mit dem Adapter 22 läßt sich nicht nur leicht und schnell mit dem im Ventil-Untergehäuse 10 befindlichen Anbohrwerkzeug 30 kuppeln, sondern auch zuverlässig im Kupplungseingriff halten, weil, wie aus Fig. 4 und 5 näher zu erkennen ist, dort auch ein Schnappverschluß 60 vorgesehen ist. Die beschriebene Verbindung 50 liegt in diesem Fall in axialem Versatz zum Schnappverschluß 60. Im vorliegenden Fall besitzt die Adapter-Buchse 22 an ihrem Unterende eine Kupplung 52, welche, ausweislich der Querschnittansicht von Fig. 5, aus einem Sechskant besteht. Der Adapter 22 wird mit seiner Kupplung 52 in die erwähnte Aufnahme 51 eingesteckt, die versenkt im Inneren des rohrartig ausgebildeten Anbohrwerkzeugs 30 angeordnet ist. Die Aufnahme 51 besteht aus einem Sechskant-Loch.

Die beiden Schließhälften 61, 62 des erwähnten Schnappverschlusses 60 sind gegenüber der Verbindung 50 axial höhergesetzt. Im vorliegenden Fall besteht die im Anbohrwerkzeug 30 vorgesehene Schließhälfte aus einer radial hinterschnittenen Ausnehmung 61, während die komplementäre andere Schließhälfte aus einem Federring 62 gebildet ist, welcher in einer Umfangsnut 63 der Adapter-Buchse 22 eingelassen ist. Sowohl die Verbindungsteile 51, 52 als auch die beiden Schließhälften 61, 62 sind durch eine axiale Steckbewegung im Sinne des in Fig. 4 eingezeichneten Pfeils 53 miteinander in Eingriff bringbar, und zwar schnappen die beiden Schließhälften 61, 62 erst dann ineinander, wenn die volle Eingriffsposition der beiden Kupplungshälften 51, 52 vorliegt. Durch eine entsprechende, gegenläufige axiale Auszugsbewegung im Sinne des Pfeils 53' von Fig. 4 werden zunächst die beiden Schließhälften 61, 62 durch elastische Deformation des dortigen Federrings freigegeben, bevor dann auch die Verbindungsteile 50 in volle Freigabelage zueinander gelangen. Der Adapter 22 besteht vorteilhaft aus korrosionsfestem Material, wofür sich besonders Chrom-Nickel-Stahl gemäß DIN 47237 bewährt haben. Dieses Material dient auch zur Ausbildung des Sprengrings 37.

Weil die Verbindung 50 durch den zugleich in Eingriff gebrachten Schnappverschluß 60 gesichert ist, besteht nicht die Gefahr, daß das Anbohrwerkzeug 30 sich unerwünschterweise vom Adapter 22 löst und daher die Drehbetätigung 58, 58' am herausragenden Spindelende 71 ins Leere geht. Diese beiden Teile 22, 30 können aber durch Aufwenden einer bestimmten Auszugskraft in Richtung des Pfeils 53' wieder schnell voneinander gelöst werden. In Steckbewegungsrichtung 53 stützt sich die Adapter-Buchse 22 mit einer aus Fig. 4 erkennbaren Umfangsschulter 59 an einer radialen Absatzfläche im Inneren der Ausnehmung 61 vom Anbohrwerkzeug 30 ab. Es versteht sich, daß solche Anschläge auch an anderen Stellen zwischen den beiden Bauteilen 22, 30 vorgesehen sein könnten. Aus Platzersparnisgründen wäre es z. B. zweckdienlich, den Schnappverschluß 60 in die gleiche axiale Zone zwischen den beiden Bauteilen 22, 30 zu legen, wo bereits die Kupplung 50 liegt.

Wenn die Ventil-Absperrlage des Anbohrwerkzeugs 30 gemäß Fig. 2 erreicht ist und dabei das herausragende Spindelende 71 im Sinne des Drehpfeils 58 von Fig. 1 weitergedreht wird, könnte es zu einer Beschädigung der zusammenwirkenden Bauteile 32, 42 kommen, weil das Anbohrwerkzeug 30 gezwungen wird, sich weiter im Sinne des Pfeils 35 von Fig. 1 abwärts zu schrauben. Um dies auszuschließen, empfiehlt es sich, in den Übertragungsweg des Drehmoments zwischen dem drehbetätigten Spindelende 71 einerseits und dem angetriebenen Anbohrwerkzeug 30 andererseits eine Überlastsperre 80 anzuordnen, wovon ein Ausführungsbeispiel in den Fig. 11 bis 13 gezeigt wird. In diesem Fall ist die Überlastsperre 80 in dem Übertragungsbereich 73 des Drehmoments zwischen der Spindel 21 und dem Adapter 22 angeordnet. Die Erfindung nutzt dabei die Erkenntnis, daß die Drehmitnahmeflächen nur im verengten Buchsenendstück 25 sich befinden, während der Schaft 21 mit wechselnden Axialzonen wirkt. Deshalb wird das Schaftprofil 23 der Spindel 21 starr ausgebildet, aber der unrunde Buchsenquerschnitt 24 bereichsweise elastisch nachgiebig gestaltet.

Ausweislich der Fig. 11 bis 13 werden mindestens die eine, vorzugsweise aber zwei diametral einander gegenüberliegende Drehmitnahmeflächen 84 im Sinne der aus Fig. 12 ersichtlichen Biegepfeile 83 elastisch nachgiebig gemacht. Im vorliegenden Fall verwendet man dazu zwei aus federndem Material bestehende Platten 81, die mit ihren jeweiligen Plattenenden 82 in zwei Längsnuten 75 im Inneren des Öffnungsquerschnitts 24 der Adapter-Buchse 22 eingelassen sind. Die Innenfläche der Federplatte 81 bildet die wirksame Drehmitnahmefläche 84 für das in Fig. 12 noch nicht eingesteckte Schaftprofil. Die beiden angrenzenden Nachbarflächen im Öffnungsquerschnitt 24 sind bei 24 freigeschnitten und dienen nicht zur Drehmitnahme.

Wenn das zu übertragende Drehmoment an den Drehmitnahmeflächen 84 einen bestimmten Grenzwert überschreitet, kommt es zu der bereits erwähnten, aus Fig. 13 ersichtlichen Ausbiegung 81' der beiden Federplatten. Dies ist möglich, weil, den wirksamen elastischen Drehmitnahmeflächen 84 gegenüberliegend, Radialausnehmungen 76 hinter den Platten 81 gemäß Fig. 12 angeordnet sind. Die Plattenausbiegungen 81' können daher in die Radialausnehmungen 76 ausweichen und schaffen eine für den Maximaldurchmesser des Schaftprofils 23 genügende lichte Weite, so daß sich der Schaft 21 durchdrehen kann. In Fig. 13 ist die Verkantungslage 21" des Spindel-Schafts dargestellt, wo sich gerade maximale Ausbiegungen 81' der beiden Federplatten ergeben. Die beiden anderen Kanten des Schafts 21 können dabei in die erwähnten Freischnitte 74 der angrenzenden Querschnittsflächen einfahren. Der obere Grenzwert für die Drehmomentübertragung, bei deren Überschreitung die Überlastsperre 80 wirksam wird, läßt sich durch die Auswahl des Federwerkstoffs der Platten 81, ihre Plattendicke und ihre Einspanntiefe in den Längsnuten 75 bestimmen.

In der Verwendung des Ventil-Untergehäuses 10 als einfache Anbohrarmatur 90, gemäß Fig. 7, ist es möglich, zusätzlich zu dem beschriebenen, eingesetzten Stopfen 55, auch noch eine Endkappe 77 auf dem oberen Endstück 78 des Standrohres 11 zu befestigen. Die Befestigung zwischen der Endkappe 77 und dem Standrohr 11 erfolgt zweckmäßigerweise durch das noch näher zu erläuternde Schweißen, doch könnten auch andere Befestigungsmethoden, wie Kleben oder Gewindeverbindungen, anwendbar sein. Zweckmäßigerweise wird die Befestigung dieser Teile in der gleichen Weise vollzogen, wie die Kappe 20 des Ventilaufsatzes 70 bei der Umwandlung der Anbohrarmatur 90 in die Ventil-Anbohrarmatur 90'. Auch dieser Ventilaufsatz 70 wird, wie in Fig. 2 erläutert ist, auf das nämliche obere Endstück 78 des Standrohres 11 aufgesteckt und damit verbunden.

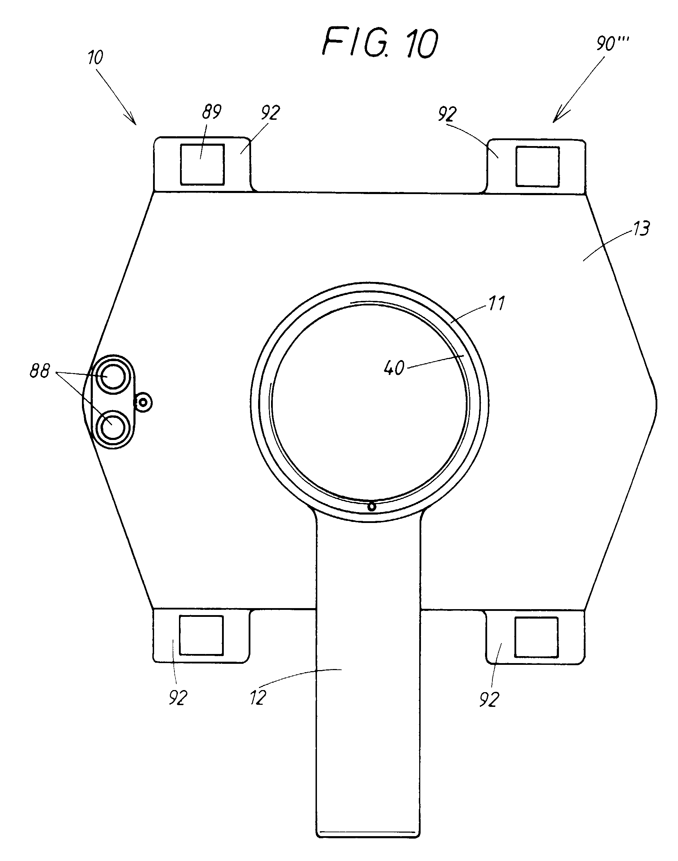

Vorzugsweise werden alle Befestigungen zwischen den aus Kunststoffmaterial erzeugten Bestandteilen der Armatur 90 bzw. 90' durch eine Schweißverbindung erzielt. Dazu dienen Heizdrähte 85, die ausweislich der Fig. 2 an der Mantelinnenfläche der Kappe 20 bzw. der in Fig. 7 gezeigten Endkappe 77 und an der inneren Anlagefläche 79 des beschriebenen Schellenteils 13 gemäß Fig. 2 angeordnet sind. Entsprechendes kann auch für den Anschluß eines weiterführenden Rohres am Ende des Abgangsrohres 12 gelten. Zweckmäßigerweise verwendet man für den Einbau des Heizdrahtes in diese Kunststoffteile einen die Wicklung des Heizdrahtes 85 jeweils aufnehmenden, aus Fig. 9 ersichtlichen Spulenkörper 86 oder eine Trägerplatte 87, die entsprechend dem gewünschten Drahtverlauf angeordnete Aufnahmerillen aufweisen. Die mit dem Heizdraht 85 ausgerüsteten Spulenkörper 86, 87 werden in das Spritzwerkzeug eingelegt, in welchem dann die kompletten Kunststoffteile 10, 20, 77 gespritzt werden. Die Trägerplatte 87 wird in den Schellenteil 13 integriert und umschließt, wie aus der gestrichelt in Fig. 9 angedeuteten Plattenbegrenzung ersichtlich ist, sattelförmig die untere Öffnung des Standrohres 11. Die mit dem Heizdraht 85 ausgerüsteten Teile 10, 20, 77 sind mit elektrischen Anschlüssen 88 verbunden, die aus Fig. 7 und 10 ersichtlich sind.

Vor einer endgültigen Schweißbefestigung des Schellenteils 13 an der Umfangsfläche der Versorgungsleitung 15 und beim Bohren ist eine vorübergehende Befestigung des Ventil-Untergehäuses 10 an der gewünschten Anbohrstelle erforderlich. Dazu eröffnet die Erfindung verschiedene, wahlweise nutzbare Möglichkeiten. Eine besteht darin, ein Schellen-Gegenstück zu verwenden, welches über Schraub- oder Klemmverbindungen mit dem zum Gehäuse 10 gehörenden Schellenteil 13 mechanisch verbunden wird. Dazu besitzt, wie Fig. 10 zeigt, das Gehäuse 10 vorzugsweise paarweise an jeder Seite angeordnete Radialansätze 92, welche Durchtrittslöcher 89 für entsprechende Befestigungsmittel aufweisen. Es ist aber auch möglich, biegsame Stränge um die anzubohrenden Versorgungsleitung 15 zu legen, die mit endseitigen Haken versehen sind, welche in das jeweilige Durchtrittsloch 89 eingehängt werden können. Diese Stränge sind nach dem Einhängen spannbar.

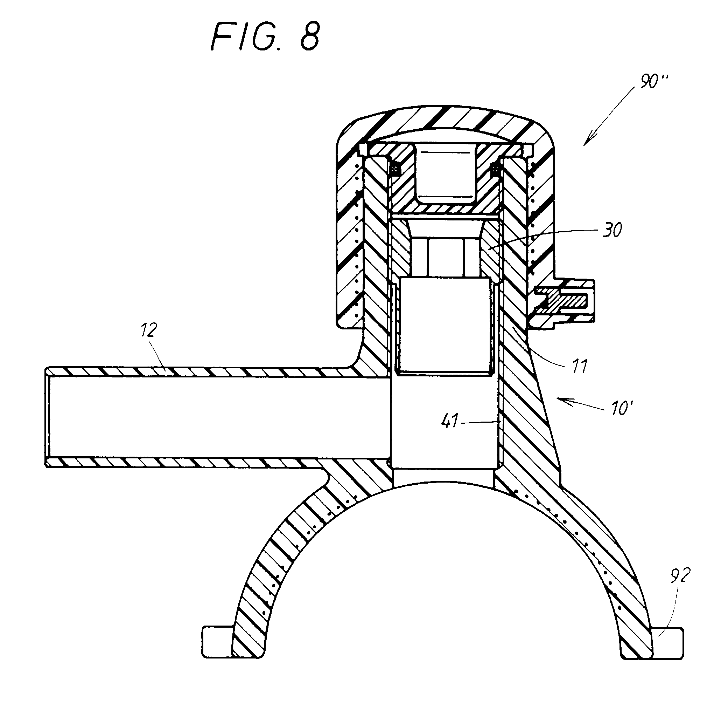

Fig. 8 zeigt eine Variante 10' des Gehäuses im Anwendungsfall als einfache Anbohrarmatur 90", das sich gegenüber dem vorausgehend beschriebenen Untergehäuse 10 nur dadurch unterscheidet, daß die vorausgehend stets genutzte metallische Gewindehülse 40 weggelassen ist und die zur Verschraubung des Werkzeugs 30 dienenden Innengewinde 41 unmittelbar in der Innenfläche des Standrohres 10 angeordnet sind. In übriger Hinsicht gilt die bisherige Beschreibung. Diese Version 10' wird vorzugsweise bei kleinen Rohrdurchmessern verwendet, die unter mäßigem Druck stehen und z. B. Gas führen. In diesem Fall sind die anfallenden Bohrkräfte verhältnismäßig gering. Wenn aber große Leitungs-Durchmesser vorliegen und entsprechend starkwandige Leitungen angebohrt werden müssen, verwendet man die vorbeschriebene Anbohrarmatur 90, deren Gehäuse 10 die Gewindehülse 40 aufweist.

Die Anbohrarmatur von Fig. 15 besteht aus einem einstückigen Gehäuse 10" aus Kunststoff, welches aus einem vertikalen Bohrstutzen 20', ein im dazu abgewinkelt verlaufenden Abzweigstutzen 12' und einem zur Befestigung des Gehäuses 10" an einem anzubohrenden Rohr 15 dienenden Sattel 13' besteht. Ausweislich der strichpunktierten Stutzen-Achsen 16, 17 verlaufen die beiden Stutzen 12', 20' im Ausführungsbeispiel von Fig. 15 senkrecht zueinander. Der Abzweigstutzen 12' mündet mit einer gegenüber seinem Stutzenquerschnitt verengten Öffnung 43 in den Bohrstutzen 20' ein. Diese Öffnung soll nachfolgend kurz "Mündungsöffnung 43" bezeichnet werden.

Der Sattel 13' des Gehäuses 10" dient dazu, um die Armatur an einer gewünschten Stelle 14 an einem aus thermoplastischem Kunststoff bestehenden Rohr 15 zu befestigen. Das Rohr 15 kann unter höherem Mediendruck stehen, wobei als Medien Gas, Wasser od. dgl. dienen können. Bei der Befestigung wirkt mit dem Sattel 13' eine in Fig. 15 strichpunktiert angedeutete Schelle 13 od. dgl. zusammen, wobei die entscheidende Befestigung durch eine Schweißverbindung mittels einer elektrischen Heizspirale im Bereich der angedeuteten Berührungsflächen 79 zwischen dem Sattel 13' und der Umfangsfläche des Rohres 15 zustande kommt, deren Heizleiter 85 in Fig. 15 im Querschnitt gezeigt ist. Nach seiner Befestigung verläuft der Bohrstutzen 20' vertikal, während der Abzweigstutzen 12' davon horizontal absteht. Beide Stutzenachsen 16, 17 liegen in einer Ebene, welche die Querschnittsebene der Zeichnung von Fig. 15 bestimmt.

Der Bohrstutzen 20' besitzt ein im vorliegenden Fall in besonderer Weise ausgebildetes Innengewinde 41, in welchem das Anbohrwerkzeug 30 verschraubbar ist. Dieses Anbohrwerkzeug 30 umfaßt einen mit einem entsprechenden Außengewinde 31 versehenes Kopfstück 3o', dem sich ein zylinderisches Schaftstück 21 mit glatter Umfangsfläche 21' anschließt. Das Anbohrwerkzeug 30 ist hülsenförmig gestaltet und der Außendurchmesser des Schaftstücks 21 gegenüber demjenigen des Kopfstücks 20' abgesetzt. Im zylindrischen Innenraum des Anbohrwerkzeugs 30 befindet sich ein unrunder Bereich 51, der im vorliegenden Fall als Innensechskant ausgebildet ist und zum Einstecken eines ein entsprechendes Gegenprofil aufweisenden Betätigungswerkzeugs dient. Dieses Betätigungswerkzeug, z. B. ein Imbusschlüssel, dient dazu, um das Anbohrwerkzeug 30 aus der oberen Endposition, die in Fig. 15 in der linken Hälfte des Bohrstutzens 20' gezeigt ist, in ihre ausgefahrene untere Position zu überführen, welche in der rechten Hälfte des Bohrstutzens 20' von Fig. 15 dargestellt ist. Wie daraus ersichtlich, schneidet das Werkzeug 30 dabei einen Wandbereich aus dem Rohr 15 heraus, der als Bohrkern 14' im Inneren des Schaftstücks 21 stehen bleibt und den Querschnitt dort mediendicht verschließt.

Die Besonderheit der Erfindung liegt darin, daß im Bohrstutzen 20', unterhalb des erwähnten Innengewindes 41, eine Stützbuchse 100 angeordnet ist, deren lichte Buchsenweite dem Durchmesser der Umfangsfläche 34" vom Anbohrwerkzeug 30 genau angepaßt ist und daher zu dessen Gleitführung dient. Bereits in der erwähnten oberen, eingefahrenen Position ragt das Anbohrwerkzeug 30 in den oberen Bereich der Stützbuchse 100 hinein.

Dort befindet sich eine obere Ringaufnahme 101, die zur Aufnahme eines oberen Dichtrings 102 dient. Beim Verschrauben wird das mit einer zugeschärften Schneidkante 34' versehene Schaftende präzise gegen die anzubohrende Stelle 14 im Rohr 15 herangeführt, tritt aus der dort befindlichen Innenöffnung 106 des Bohrstutzens 20' heraus und schneidet das erwähnte Kernstück 14' aus. Auch in der ausgefahrenen, unteren Position bleibt die Gleitführung zwischen der Umfangsfläche des Schaftstücks 21 und der Innenfläche des Bohrstutzens bestehen. Im Bereich der Innenöffnung 106 besitzt die Stützbuchse 100 eine untere Ringaufnahme 103, worin eine ringförmige Lippendichtung 104 angeordnet ist. Die beiden Dichtungen 102, 104 schließen zwischen sich die vorerwähnte Mündungsöffnung 43 des Abzweigstutzens 12' ein.

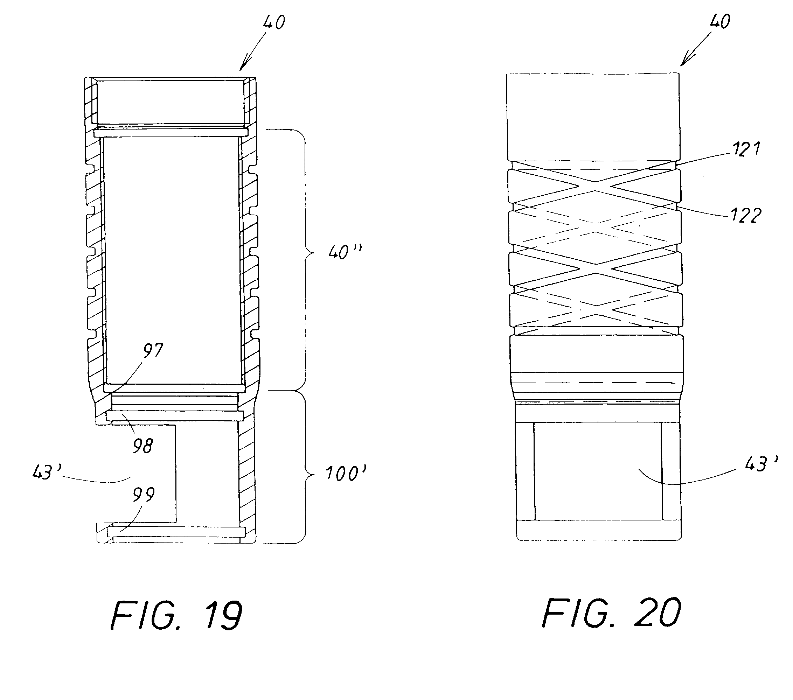

Das erwähnte Innengewinde 41' im Bohrstutzen 20' könnte unmittelbar in das Kunststoffmaterial des Gehäuses 10" eingearbeitet sein. Zweckmäßigerweise verwendet man aber in diesem Bereich eine in Fig. 15 erkennbare Gewindehülse 40", die aus formsteifem Material gebildet ist. Dieses formsteife Material könnte ein härterer Kunststoff sein, doch wird im vorliegenden Fall metallisches Material, nämlich insbesondere Messing, verwendet. Diese Gewindehülse 40 ist in einem Axialabstand 107 von der im unteren Bereich des Bohrstutzens 20' in das Kunststoffmaterial eingelassenen Stützbuchse 100 entfernt angeordnet. Wie Fig. 19 und 20 zeigen, können aber die Gewindehülse 40 und die Stützbuchse 100 auch einstückig ausgebildet sein. In diesen Abstand 107 fließt bei der Druckgußherstellung des Gehäuses 10" das Kunststoffmaterial ein und bildet einen die Buchse 100 von der Hülse 40 trennenden Steg 108 aus Kunststoffmaterial. Die lichte Weite 105 der Stützbuchse 100 ist kleiner als die Innenweite 109 des mit dem Innengewinde 41 ausgerüsteten Abschnitts der Gewindehülse 40 ausgebildet.

Die Gewindehülse 40" ist in ihrem oberen Bereich mit einer Stufe 40' versehen, die eine größere lichte Weite mit einem Innengewinde aufweist, worin ein nicht näher gezeigter Abschlußstopfen einschraubbar ist. An der Übergangsstelle zwischen diesem Endabschnitt 40' und dem zum Verschrauben des Werkzeugs 30 dienenden Abschnitt mit dem Innengewinde 41 befindet sich ein Sprengring 37 od. dgl., welcher als oberer Anschlag beim Aufwärtsschrauben des Anbohrwerkzeugs 30 dient und daher dessen erwähnte obere, eingefahrene Position begrenzt. Der Sprengring 37 ist in einer im verbreiterten Endabschnitt 40' eingelassenen Innennut positioniert.

In Fig. 16 ist eine abgewandelte Ausführung der Anbohrarmatur gezeigt, zu welcher, außer dem bereits beschriebenen Anbohrwerkzeug 30, ein gegenüber Fig. 15 abgewandelt ausgebildetes Gehäuse 110 verwendet wird. Auch dieses Gehäuse 110 umfaßt einen Bohrstutzen 111 und einen über eine Mündungsöffnung 114 davon abgehenden Abzweigstutzen 112 sowie einen zur Befestigung des Gehäuses 110 an dem Rohr 15 dienenden Sattel 113, doch sind diese Gehäuseteile sowohl zueinander als auch bezüglich des anzubohrenden Rohres 15 anders positioniert. Ausweislich der auch hier strichpunktiert angedeuteten beiden Stutzenachsen 16, 17 laufen diese in einem spitzen Winkel 117 aufeinander zu und liegen, nach der Befestigung des Gehäuses 110, im wesentlichen in einer durch die Rohrachse 118 gehenden Axialebene, welche die Zeichenebene von Fig. 16 ist. Es liegt ein V-Gehäuse 110 vor. Zum Anbohren wird das Anbohrwerkzeug 30 in dem geneigt zur Rohrachse 118 verlaufenden Bohrstutzen 111 eingeführt und in der geschilderten Weise die Bohrarbeit ausgeführt. Bedeutsam ist, daß auch der für den Strömungsweg des Mediums nach dem Anbohren maßgebliche Abzweigstutzen 112 horizontal liegt und daher die am Abzweigstutzen 112 anzubringende weiterführende Leitung höhengleich mit dem Rohr 15 weiterlaufen kann. Der Durchmesser beider Stutzen 111, 112 ist in der Regel beträchtlich kleiner als der Außendurchmesser des Rohres 15 ausgebildet. Der Abzweigstutzen 112 verläuft senkrecht zur Rohrachse 118.

Wegen der Neigungslage läuft der Bohrstutzen 111 mit einer längsovalen Innenöffnung 115 im Sattel 113 aus. Auch hier erfolgt die Befestigung des V-Gehäuses 110 durch Schweißen. Dazu sind in Fig. 16 die Windungen eines im Bereich der Anlagefläche integrierten elektrischen Heizleiters 85 im Querschnitt angedeutet, dessen eine Anschlußstelle im Bereich eines aufgesetzten Kontaktblocks 119 zu erkennen ist. Weil der Bohrvorgang im Sinne der Bohrstutzen-Achse 17 geneigt in die Wand des Rohres 15 ausgeführt wird, entsteht dort ein längsovaler Wandausschnitt.

Die im ersten Ausführungsbeispiel von Fig. 15 beschriebenen Bauteile, nämlich die Stützbuchse 100 und die Gewindehülse 40" für die Bildung des Innengewindes 41 sind in der bereits beschriebenen Weise auch hier verwirklicht. Insoweit gilt die bisherige Beschreibung. Die Stützbuchse 100 erstreckt sich bis zur Anlage mit der Umfangsfläche des anzubohrenden Rohres 15. Im Gegensatz zu dem äußeren Dichtring 102 liegt der zur Innenöffnung 115 hin weisende innere Dichtring 116 nicht in einer Radialebene zur Bohrstutzen-Achse 17, sondern geneigt. Dieser innere Dichtring 116 verläuft in einer Parallelebene zur Rohrachse 118. Die Stützbuchse 100 von Fig. 16 hat entsprechend der gewünschten Position der beiden Dichtringe 102, 116 zueinander geneigte Ringaufnahmen 101, 126. Der eine Dichtring 116 kann auch als Lippendichtung gestaltet sein.

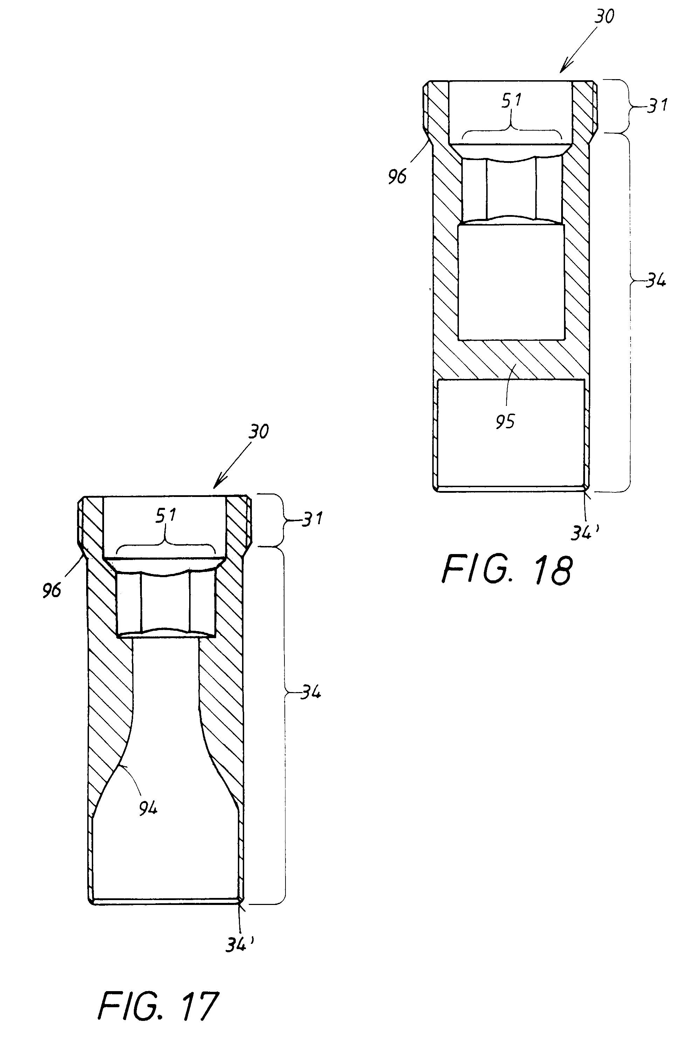

Damit der in Fig. 15 gezeigte Bohrkern 14' nicht verschoben wird und undicht wird, empfiehlt es sich, gemäß Fig. 17, im Inneren des Zylinderteils eine konische Verjüngung 94 vorzusehen, in welcher der heraufwandernde Bohrkern hängen bleibt. In Fig. 18 ist dies durch eine Innenwand 95 erreicht, die auch einstückig mit dem Bohrwerkzeug 30 ausgebildet sein kann. Besonders hervorzuheben ist die konische Schulter 96 zwischen dem Gewindeabschnitt 31 und der zylindrischen Umfangsfläche 34". Diese Schulter 96 dient nämlich beim Abwärtsschrauben als Anschlag für eine Gegenschulter 97 der in Fig. 19 und 20 einstückig ausgebildeten Gewindehülse 40. Dort sind, wie bereits erwähnt wurde, die in Fig. 15 beschriebenen beiden Abschnitte, nämlich die eigentliche Gewindehülse 40" und die Stützbuchse 100' einstückig ausgebildet. Die dortigen Nuten 98, 99 dienen zur Aufnahme von O-Ringen, die wie bereits eingangs erwähnt wurde, die Funktion von Ventildichtungen übernehmen, die mit der aus Fig. 17 und 18 ersichtlichen zylindrischen Umfangsfläche 34" des Anbohrwerkzeugs 30 zusammenwirken. Beim Abwärtsschrauben stößt die Schulter 96 an die Gegenschulter 97.

Dadurch wird nicht nur die Abwärtsschraubung begrenzt, sondern auch sichergestellt, daß die Armatur durch versehentliches Weiterdrehen der in den Fig. 1 und 2 beschriebenen Stange nicht beschädigt wird. Die in den Fig. 1 und 2 beschriebenen Angriffsflächen 72 für ein Werkzeug dienen zum Kuppeln einer langen Schlüsselstange. Die Armatur gemäß Fig. 1 und 2 ist nämlich in großer Tiefe unterhalb des Erdbodens angebracht und daher eine Schlüsselstange zur Überwindung des Abstands zwischen der Erdoberfläche und dem herausragenden Spindelende 71 erforderlich. Wenn die beiden Schultern 96, 97 in Anschlag zueinander kommen, wird die Stützbuchse 100' von Fig. 19 kräftefrei gehalten. Es findet keinerlei Deformation durch jene Drehmomente statt, die bei versehentlichem Weiterdrehen des Anbohrwerkzeugs 30 sich ergeben könnten. Die Gegenschulter 97 ist also eine Anschlagstelle, die am Übergang zwischen dem Gewindeabschnitt 40" und dem mit ventilartigen Dichtungen bei 98, 99 versehenen Abschnitt der Stützbuchse 100' angeordnet ist.

In Fig. 20 ist die Außenfläche der in Fig. 19 gezeigten Gewindehülse 40 zu erkennen. Diese umfaßt zwei gegenläufige Gewindenuten 121, 122, die verhindern, daß bei der vorerwähnten gewaltsamen Verdrehung sich die im Kunststoff der Armatur verankerte Gewindehülse 40 mitdreht. Die Querbohrung 43' ist bei dieser Gewindebuchse 40 als rechteckförmiger Ausbruch in dem die Stützbuchse 100' bestimmenden Abschnitt ausgebildet.

Hervorzuheben ist, daß die in Fig. 4 erläuterte lösbare Kupplung vorteilhafterweise zwar als Schnappkupplung ausgebildet ist, die zwar ein leichtes axiales Ineinanderkuppeln zwischen dem Anbohrwerkzeug 30 und dem Adapter 22 zuläßt, die beiden Teile 30, 22 aber nicht wieder ohne weiteres zu entkuppeln erlaubt. Dies ist einfach dadurch zu bewerkstelligen, daß man die in Fig. 4 beschriebene Ausnehmung 61 mit einer steilen Flanke versieht und nicht mit dem konischen Übergang. Um dieses sichere Ineingriffbringen zu gewährleisten, wird man auch den als andere Schließhälfte fungierenden Federring 62 nicht mit einem Rundquerschnitt, sondern mit einem Rechteckquerschnitt versehen. Dieser Rechteckquerschnitt stützt sich an der steilen Flanke von 61 ab.

### Bezugszeichenliste:

- 10: Gehäuse, Ventil-Untergehäuse
- 10': vereinfachte Variante von 10 (Fig. 8)
- 10": einstückiges Gehäuse
- 11: Standrohr von 10
- 12: Abgangsrohr von 10
- 12': Abzweigstutzen
- 13: Schellenteil von 10
- 13': Sattel von 10"
- 14: Anbohrstelle an 15
- 15: ausgeschnittener Bohrkern von 15
- 16: Versorgungsleitung, Leitung
- 17: Achse des Standrohres 11, Stutzenachse
- 18: Achse des Abgangsrohres 12, Stutzenachse
- 19: Neigungswinkel zwischen 16, 17 (Fig. 9)
- 20: oberes Stirnende von 11
- 20': Ventil-Obergehäuse, Kappe
- 21: vertikaler Bohrstutzen
- 21': Spindel, Schaft
- 21": Umfangsfläche von 21
- 22: Verkantungslage von 21 im Überlastfall (Fig. 13)
- 23: Adapter, Buchse
- 24: Schaftprofil von 21
- 25: Öffnungsquerschnitt der Buchse 22
- 26: verengtes Buchsen-Endstück von 22
- 27: endseitige Radialverbreiterung von 21 (Fig. 3)
- 28: freier Spalt zwischen 21, 22 (Fig. 1)
- 29: Ringdichtung bei 40
- 30: Umfangsnut für 28 (Fig. 14)
- 30: Anbohrwerkzeug, Schneidwerkzeug
- 30': Kopfstück von 30
- 31: Umfangsgewindeabschnitt, Außengewinde von 30
- 32: Ventil-Gegendichtstelle, Ventilteller an 30
- 33: Ringdichtung bei 32
- 34: zylindrische Umfangsfläche, Schneidmesser von 30
- 34': Schneidkante von 34
- 34": Umfangsfläche von 30
- 35: abwärts gerichtete Schraubbewegung von 30
- 35': aufwärts gerichtete Schraubbewegung von 30
- 36: Innennut in 40 (Fig. 14)
- 37: Innenschulter in 40, Sprengring
- 38: elastischer Dichtring in 39
- 39: Umfangsnut von 40 bei 42
- 40: Gewindehülse
- 40': äußerer Endabschnitt von 40
- 40": Gewindehülse (Fig. 16)
- 41: Innengewinde von 40
- 42: Ventil-Dichtstelle, Ventilsitz in 11
- 43: Querbohrung in 40 (Fig. 14), Mündungsöffnung (Fig. 15)
- 43': Querbohrung (Fig. 19/20)
- 44: metallischer Rohransatz bei 43 (Fig. 9)
- 45: Zentrierbohrung an 40 (Fig. 14)
- 46: Hülsen-Stirnfläche von 40
- 47: Umfangs-Längsprofil von 40
- 48: linksgängiges Umfangsgewinde für 47
- 49: rechtsgängiges Umfangsgewinde für 47
- 50: ein Drehmoment übertragende Verbindung zwischen 51, 52
- 51: Aufnahme, Innensechskant in 30
- 52: Kupplung in 22
- 53: Steckbewegungs-Pfeil zwischen 22, 30 (Fig. 4)
- 53': Auszugsbewegungs-Pfeil zwischen 22, 30 (Fig. 4)
- 54: Bohrloch in 15 (Fig. 2)
- 55: Stopfen (Fig. 7)
- 56: Ringdichtung von 55 (Fig. 7)
- 57: Endflansch an 55
- 58: Drehbetätigungs-Pfeil von 71 (Fig. 1)
- 58': Gegen-Drehbetätigungs-Pfeil von 71 (Fig. 1)
- 59: Umfangsschulter an 22 (Fig. 4)
- 60: Schnappverschluß
- 61: erste Schließhälfte von 60, hinterschnittene Ausnehmung in 30
- 62: andere Schließhälfte von 60, Federring (Fig. 4)
- 63: Umfangsnut für 62 (Fig. 4)
- 64: Lagerring für 21 (Fig. 1)
- 65: Ringdichtung in 21 (Fig. 2)
- 66: Ringdichtung in 64 (Fig. 2)
- 67: Ringinnenfläche von 64 (Fig. 2)
- 68: Ringumfangsfläche von 64 (Fig. 2)
- 69: Dichtungsmanschette (Fig. 2)
- 70: Ventilaufsatz (Fig. 1)
- 71: herausragendes Spindelende von 21
- 72: Werkzeug-Angriffsfläche an 71
- 73: Übertragungsbereich für Drehmomente zwischen 21, 22 (Fig. 3)
- 74: freigeschnittene Nachbarfläche von 84, Freischnitt
- 75: Längsnut für 82 (Fig. 12)
- 76: Radialausnehmung hinter 81 (Fig. 12)
- 77: Endkappe (Fig. 7)
- 78: oberes Endstück von 11 (Fig. 2, 7)
- 79: Anlagefläche an 13 für 15 (Fig. 2)
- 80: Überlastsperre (Fig. 13)
- 81: Federplatte für 80
- 81': Biegeposition von 81 (Fig. 13)
- 82: Plattenende von 80
- 83: Biegepfeil von 81 (Fig. 12)
- 84: wirksame Drehmitnahmefläche von 24 (Fig. 12)
- 85: Heizdraht
- 86: Spulenkörper von 85 (Fig. 9)
- 87: Trägerplatte für 85 (Fig. 9)
- 88: elektrische Anschlüsse für 85 (Fig. 7, 10)
- 89: Durchtrittsloch an 92 (Fig. 10)
- 90: Anbohrarmatur (Fig. 6, 7)
- 90': Ventil-Anbohrarmatur (Fig. 1, 2)
- 90": abgewandelte Anbohrarmatur (Fig. 9)
- 90"': alternative Anbohrarmatur (Fig. 9)
- 91: Drehhandhabe für 30 (Fig. 6)
- 92: Radialansatz (Fig. 1, 8, 10)
- 93: Drehpfeil für 91 (Fig. 6)
- 94: konische Verjüngung
- 95: Innenwand
- 96: Schulter in 30
- 97: Gegenschulter
- 98: Nut
- 99: Nut
- 100: Stützbuchse (Fig. 15)
- 100': Stützbuchse (Fig. 15)1
- 101: obere / äußere Ringaufnahme in 100
- 102: oberer / äußerer Dichtring
- 103: untere Ringaufnahme in 100
- 104: untere Lippendichtung
- 105: lichte Weite von 100
- 106: Innenöffnung von 20'
- 107: Axialabstand zwischen 40 und 100
- 108: Steg aus Kunststoffmaterial bei 107
- 109: Innenweite von 40
- 110: V-Gehäuse (Fig. 16)
- 111: Bohrstutzen von 110
- 112: Abzweigstutzen von 110
- 113: Sattel von 110
- 114: Mündungsöffnung von 112
- 115: Innenöffnung von 111
- 116: innerer Dichtring (Fig. 16)
- 117: spitzer Winkel von 16, 17 (Fig. 16)
- 118: Rohrachse von 111
- 119: Kontaktanschlußblock von 88
- 120: Ringaufnahme in 100 für 116
- 121: Gewindenut (Fig. 20)
- 122: Gewindenut (Fig. 20)
- 123: längsovaler Wandausschnitt in 15
- 124: Innenöffnung von 16
- 125: äußerer Endabschnitt von 40"
- 126: Achse von 15

## Patentansprüche

1. Anbohrarmatur (90) für vorzugsweise unter Mediendruck stehende Versorgungsleitungen (15) aus Kunststoff,
mit einem über der anzubohrenden Stelle (14) der (11) Leitung (15) zu positionierenden Gehäuse (10) mit einem Standrohr (11) und mit einem Abgangsrohr (12),
wobei das Standrohr mit einem Innengewinde (41) versehen ist und im Bereich seines der Leitung zugekehrten Unterendes eine Ventil-Dichtstelle (42) aufweist,
und mit einem im Innengewinde (41) des Standrohres (11) verschraubbaren, zylindrischen Anbohrwerkzeug (30), welches eine Aufnahme (51) für eine Drehhandhabe (91) und eine Ventil-Gegendichtstelle (32) besitzt,
**dadurch gekennzeichnet,**
daß der Anbohrarmatur (90) einerseits ein vormontierter Ventilaufsatz (70) zugeordnet ist,
bestehend aus einer Kappe (20) mit einer darin axialfest drehgelagerten (64), von außen drehbetätigbaren (58, 58') Spindel (21),
wobei die Kappe (20) als Obergehäuse an dem als Untergehäuse fungierenden Gehäuse (10) der Anbohrarmatur (90) befestigbar ist und diese in eine Ventil-Anbohrarmatur (90') mit einem aus dem Unter- und Obergehäuse (10, 20) gebildeten Ventilgehäuse wandelt,
und daß der Anbohrarmatur (90) und dem Ventilaufsatz (70) andererseits ein Adapter (22) zugeordnet ist,
der zwar drehfest aber längsverschieblich mit der Spindel (21) des Ventilaufsatzes (70) zusammengesteckt ist und eine zu einer Aufnahme (51) im Anbohrwerkzeug (30) komplementäre, lösbare, ein Drehmoment übertragende Kupplung (52) besitzt.

2. Anbohrarmatur nach Anspruch 1, dadurch gekennzeichnet, daß der Adapter (22) einerseits und das Anbohrwerkzeug (30) andererseits die beiden komplementären Schließhälften (61, 62) eines Schnappverschlusses (60) besitzt, (Fig. 4).

3. Anbohrarmatur nach Anspruch 1 und 2, dadurch gekennzeichnet, daß sowohl die Kupplung (52) vom Adapter (22) und die Aufnahme (51) vom Anbohrwerkzeug (30) als auch die beiden Schließhälften (61, 62) des Schnappverschlusses (60) durch eine axiale Steckbewegung (53) in Eingriff bringbar und durch eine axiale Auszugsbewegung (53') voneinander lösbar sind, (Fig. 4).

4. Anbohrarmatur nach einem oder mehreren der Ansprüche 1 bis 3, dadurch gekennzeichnet, daß zwischen der Spindel (21) und dem Adapter (22) Endanschläge (25, 26) angeordnet sind, die den maximalen Axialausschub begrenzen, und der Adapter (22) mit dem Ventilaufsatz (70) eine unverlierbare vormontierte Baueinheit bildet, (Fig. 3).

5. Anbohrarmatur nach einem oder mehreren der Ansprüche 1 bis 4, dadurch gekennzeichnet, daß das Unter- und Obergehäuse (10, 20) der Ventil-Anbohr-Anbohrarmatur, wie das Standrohr (11), das Abgangsrohr (12), die Kappe (20) und ein das Standrohr (11) tragender, an der anzubohrenden Leitung befestigbarer Schellenteil (13), aus Kunststoffmaterial bestehen.

6. Anbohrarmatur nach einem oder mehreren der Ansprüche 1 bis 5, dadurch gekennzeichnet, daß die Ventil-Dichtstelle (42) im Standrohr (11) aus einem Ventilsitz und die Ventil-Gegendichtstelle (32) am Anbohrwerkzeug (30) aus einem Ventilteller bestehen, (Fig. 6).

7. Anbohrarmatur nach einem oder mehreren der Ansprüche 1 bis 5, dadurch gekennzeichnet, daß die Ventil-Dichtstelle (42) aus mindestens einem im Standrohr (11) gelagerten, elastischen O-Ring und die Ventil-Gegendichtstelle (32) von der zylinderischen Umfangsfläche (34) des Anbohrwerkzeugs (30) gebildet sind.

8. Anbohrarmatur nach Anspruch 7, dadurch gekennzeichnet, daß der O-Ring aus einer einstückig aus dem Kunststoffmaterial des Standrohres (11) erzeugten Lippe besteht.

9. Anbohrarmatur nach einem oder mehreren der Ansprüche 1 bis 8, dadurch gekennzeichnet, daß die Spindel aus einem Schaft (21) mit unrundem Schaftprofil (23) und der Adapter aus einer die Spindel ummantelnden Buchse (22) mit unrundem Öffnungsquerschnitt (24) bestehend (Fig. 3).

10. Anbohrarmatur nach einem oder mehreren der Ansprüche 1 bis 9, dadurch gekennzeichnet, daß wenigstens eine der Drehmitnahmeflächen (84) zwischen der Spindel (21) und dem Adapter (22) elastisch nachgiebig (81') ausgebildet ist und eine Drehüberlastsperre (80) bilden (Fig. 11 bis 13).

11. Anbohrarmatur nach Anspruch 10, dadurch gekennzeichnet, daß die Überlastsperre (80) aus wenigstens einer elastisch biegsamen Federplatte (81) besteht, deren beide Plattenenden (82) im Inneren des Öffnungsquerschnitts (24) des Adapters (22) aufgenommen sind,
während der Schaft einen starren Schaftquerschnitt aufweist,
und der Öffnungsquerschnitt (24) des Adapters (22) auf der von der Spindel (21) abgekehrten Seite der Federplatte (81) eine Radialausnehmung (76) aufweist (Fig. 11 bis 13).

12. Anbohrarmatur nach einem oder mehreren der Ansprüche 2 bis 11, dadurch gekennzeichnet, daß die eine Schließhälfte des Schnappverim Anbohrwerkzeug (30) besteht, in deren axialer Verlängerung die unrund profilierte Aufnahme (51) angeordnet ist,
während die andere Schließhälfte des Schnappverschlusses (60) aus einem in einer Umfangsnut (63) des Adapters (22) angeordneten Federring (62) besteht, in dessen axialer Verlängerung die unrund profilierte Kupplung (52) angeordnet ist (Fig. 4, 5).

13. Anbohrarmatur nach einem oder mehreren der Ansprüche 1 bis 12, dadurch gekennzeichnet, daß das Abgangsrohr (12) unter einem Neigungswinkel (18) zur Achse (16) des Standrohres (11) verläuft und beide Achsen (16, 17) in einer von der Achse der anzubohrenden Leitung (15) bestimmten Axialebene angeordnet sind (Fig. 9).

14. Anbohrarmatur nach einem oder mehreren der Ansprüche 1 bis 13,
**dadurch gekennzeichnet,**
daß das Gehäuse (10") in einem Bohrstutzen (20', 111) unterhalb des Innengewindes (41), eine das Anbohrwerkzeug (30) an der Umfangsfläche (34") seines Schaftstücks (21) gleitführende Stützbuchse (100) aus formsteifem Material aufweist,
die sich in den Bereich der Innenöffnung (106, 115) des Bohrstutzens (20', 111) erstreckt und diesen Bereich verstärkt,
daß die Stützbuchse (100) eine seitliche Bohrung aufweist, welche die Mündungsöffnung (43, 114) des Abzweigstutzens (12', 112) bestimmt,
und daß die Stützbuchse (100) beidseitig der Mündungsöffnung (43, 114) des Abzweigstutzens (12', 112) jeweils eine Ringaufnahme (101, 103; 101, 120) für zwei Dichtringe (102, 104; 102, 116) aufweist (Fig. 15, 16).

15. Anbohrarmatur nach Anspruch 14, dadurch gekennzeichnet, daß das Innengewinde (41) zum Verschrauben des Anbohrwerkzeugs (30) unmittelbar vom Wandmaterial des Bohrstutzens (20', 111) gebildet ist (Fig. 15, 16).

16. Anbohrarmatur nach Anspruch 14, dadurch gekennzeichnet, daß das Innengewinde (41) zum Verschrauben des Anbohrwerkzeugs (30) von einer Hülse (Gewindehülse) aus formsteifem Material gebildet wird, welche oberhalb der Stützbuchse (100) angeordnet ist und einen Abschnitt der Wandinnenfläche vom Bohrstutzen (20', 111) bildet (Fig. 15, 16).

17. Anbohrarmatur Anspruch 15 oder 16, dadurch gekennzeichnet, daß die Gewindehülse (40") mit Stützbuchse (100') einstückig ausgebildet ist (Fig. 19, 20).

18. Anbohrarmatur nach einem oder mehreren der Ansprüche 14 bis 17, dadurch gekennzeichnet, daß das Gehäuse (10", 110) der Anbohrarmatur als Kunststoff-Druckgußteil erzeugt ist, wobei die Wandinnenfläche des Bohrstutzens (20', 111) durch die Stützbuchse (100) und ggf. durch die Gewindehülse (40) verstärkt ist (Fig. 15, 16).

19. Anbohrarmatur nach einem oder mehreren der Ansprüche 14 bis 18, dadurch gekennzeichnet, daß die lichte Weite (105) der Stützbuchse (100) kleiner als die Innenweite (109) der Gewindehülse (40) ausgebildet ist (Fig. 15, 16).

20. Anbohrarmatur nach einem oder mehreren der Ansprüche 1 bis 19, dadurch gekennzeichnet, daß die Achse (17) vom Bohrstutzen (111) in spitzem Winkel (18) zur Achse (16) vom Abzweigstutzen (112) verläuft und - nach der Befestigung des Gehäuses (110) am Rohr (15) - beide Stutzenachsen (16, 17) im wesentlichen in einer durch das anzubohrende Rohr (15) gelegten Axialebene angeordnet sind (Fig. 16).

21. Anbohrarmatur nach Anspruch 20, dadurch gekennzeichnet, daß - im Befestigungsfall des Gehäuses (110) gesehen - die Axialebene mit den beiden Stutzenachsen (16, 17) im wesentlichen horizontal verläuft und der Bohrstutzen (111) sowie Abzweigstutzen (112) im wesentlichen zueinander höhengleich neben dem anzubohrenden Rohr (15) liegen.

22. Anbohrarmatur nach Anspruch 20 oder 21, dadurch gekennzeichnet, daß die Achse (16) des Abzweigstutzens (112) im wesentlichen senkrecht und die Achse (17) des Bohrstutzens (111) geneigt zur Längsachse (126) vom anzubohrenden Rohr (15) verlaufen.

23. Anbohrarmatur nach einem oder mehreren der Ansprüche 1 bis 22, dadurch gekennzeichnet, daß das Anbohrwerkzeug (30) an der Übergangsstelle zwischen seinem mit Außengewinde versehenen Kopf (31) und seiner zylinderischen Umfangsfläche (34) eine vorzugsweise konisch abgesetzte Schulter (96) besitzt, welcher eine als Anschlag dienende Gegenschulter (97) an dem einstückigen metallischen Einsatz (40) für den Bohrstutzen vorgesehen ist.

24. Anbohrarmatur nach Anspruch 23, dadurch gekennzeichnet, daß die Gegenschulter (97) aus einem konischen Übergang zwischen dem Gewindeabschnitt (40") und dem Stützbuchsenabschnitt (100') des metallischen Einsatzes (40) vom Bohrstutzen angeordnet ist und vorzugsweise eine Gegen-Konizität besitzt.

25. Anbohrarmatur nach einem oder mehreren der Ansprüche 1 bis 24, dadurch gekennzeichnet, daß das Anbohrwerkzeug (30) in seinem Inneren einen sich nach innen zunehmend verengenden Raum aufweist, der zur dichtwirksamen Aufnahme des Bohrkerns (14') dient.

26. Anbohrarmatur nach einem oder mehreren der Ansprüche 1 bis 24, dadurch gekennzeichnet, daß im Inneren des hohlzylindrischen Anbohrwerkzeugs (30) eine Innenwand (95) als Sperre für das Druckmedium und/oder den im Inneren aufgenommenen Bohrkern (14') vorgesehen ist.

## Claims

1. Drilling device (90) for plastic supply lines (15) preferably under medium pressure,
with a housing (10) to be positioned over the location (14) to be drilled in the line (15) with a standpipe (11) and a discharge pipe (12),
the standpipe being provided with an internal thread (41) and exhibiting in the area of its bottom end facing the line a valve sealing point (42),
and with a cylindrical drilling tool (30) which can be screwed into the internal thread (41) of the standpipe (11), said tool having a receptacle (51) for a turning handle (91) and a valve counter-sealing point (32),
characterised in that
the drilling device (90), on the one hand, has a pre-assembled valve bonnet (70),
consisting of a cap (20) with a spindle (21) which is mounted (64) so that it is axially fixed and can be turned from outside (58, 58'),
the cap (20) being attachable as a top housing on the housing (10) functioning as a bottom housing of the drilling device (90) and converting said device into a valve drilling device (90') with a valve body formed by the bottom and top housings (10, 20),
and that, on the other hand, an adapter (22) is assigned to the drilling device (90) and the valve bonnet (70),
said adapter being joined to the spindle (21) of the valve bonnet (70) so that it is cannot rotate but can be moved longitudinally and having a detachable torque-transmitting coupling (52) complementary to a receptacle (51) in the drilling tool (30).

2. A drilling device according to claim 1, characterised in that the adapter (22), on the one hand, and the drilling tool (30), on the other hand, have the two complementary closing halves (61, 62) of a snap lock (60) (Fig. 4).

3. A drilling device according to claims 1 and 2, characterised in that both the coupling (52) of the adapter (22) and the receptacle (51) of the drilling tool (30) as well as the two closing halves (61, 62) of the snap lock (60) can be made to interlock by means of an axial insertion motion (53) and can be detached from each other by means of an axial retraction motion (53') (Fig. 4).

4. A drilling device according to one or more of claims 1 to 3, characterised in that end stops (25, 26) are arranged between the spindle (21) and the adapter (22), said end stops limiting the maximum axial retraction motion, and that the adapter (22) forms a loss-proof, pre-assembled unit with the valve bonnet (70) (Fig. 3).

5. A drilling device according to one or more of claims 1 to 4, characterised in that the top and bottom housings (10, 20) of the valve drilling device, just like the standpipe (11), the discharge pipe (12), the cap (20) and a clip component (13) holding the standpipe (11) and attachable to the pipe to be drilled, are made of plastic material.

6. A drilling device according to one or more of claims 1 to 5, characterised in that the valve sealing point (42) in the standpipe (11) consists of a valve seat and the valve counter-sealing point (32) on the drilling tool (30) of a valve disk (Fig. 6).

7. A drilling device according to one or more of claims 1 to 5, characterised in that the valve sealing point (42) is formed by at least one flexible O-ring mounted in the standpipe (11) and the valve counter-sealing point (32) by the cylindrical circumferential surface (34) of the drilling tool (30).

8. A drilling device according to claim 7, characterised in that the O-ring consists of a lip produced in one piece from the plastic material of the standpipe (11).

9. A drilling device according to one or more of claims 1 to 8, characterised in that the spindle consists of a shaft (21) with a non-circular shaft profile (23) and the adapter consists of a bush (22) surrounding the spindle with a non-circular opening cross section (24) (Fig. 3, 22).

10. A drilling device according to one or more of claims 1 to 9, characterised in that at least one of the rotary pulling surfaces (84) between the spindle (21) and the adapter (22) is designed to be flexibly resilient (81') forming a rotary overload lock (80) (Figs 11 to 13).

11. A drilling device according to claim 10, characterised in that the overload lock (80) consists of at least one flexibly pliant spring plate (81) both ends (82) of which are accommodated inside the opening cross section (24) of the adapter (22),
whereas the shaft exhibits a rigid shaft cross section,
and the opening cross section (24) of the adapter (22) has a radial recess (76) on the side of the spring plate (81) facing away from the spindle (21) (Figs 11 to 13).

12. A drilling device according to one or more of claims 2 to 11, characterised in that the one closing half of the snap lock (60) consists of a radially backcut recess (61) in the drilling tool (30) and that the non-circular receptacle (51) is arranged in the axial extension of said recess,
whereas the other closing half of the snap lock (60) consists of a lock washer (62) arranged in a circumferential groove (63) of the adapter (22) and the non-circular coupling (52) is arranged in the axial extension of said washer (Figs 4, 5).

13. A drilling device according to one or more of claims 1 to 12, characterised in that the discharge pipe (12) runs at an angle of inclination (18) to the axis (16) of the standpipe (11) and both axes (16, 17) are arranged in an axial plane determined by the axis of the pipe to be drilled (15) (Fig. 9).

14. A drilling device according to one or more of claims 1 to 13,
characterised in that
the housing (10") has in a drilling nozzle (20', 111) under the internal thread (41) a supporting bush (100) guiding the drilling tool (30) in a sliding manner on the circumferential surface (34") of its shaft section (21), said bush being made of dimensionally stable material,
said bush extending into the area of the inner opening (106, 115) of the drilling nozzle (20', 111) and reinforcing this section,
the supporting bush (100) having a lateral bore which determines the opening (43, 114) of the branch nozzle (12', 112),
and that the supporting bush (100) has on both sides of the opening (43, 114) of the branch nozzle (12', 112) an annular receptacle (101, 103; 101, 120) for two seals (102, 104; 102, 116) (Figs15, 16).

15. A drilling device according to claim 14, characterised in that the internal thread (41) for screwing on the drilling tool (30) is formed directly by the wall material of the drilling nozzle (20', 111) (Fig. 15, 16).

16. A drilling device according to claim 14, characterised in that the internal thread (41) for screwing on the drilling tool (30) is formed by a sleeve (threaded sleeve) made of dimensionally stable material, said sleeve being arranged above the supporting bush (100) and forming a section of the wall inside surface of the drilling nozzle (20', 111) (Figs 15, 16).

17. A drilling device according to claim 15 or 16 , characterised in that the threaded sleeve (40") with the supporting bush (100') is formed as one piece (Figs 19, 20).

18. A drilling device according to one or more of claims 14 to 17, characterised in that the housing (10", 110) of the drilling device is produced as a plastic pressure die casting, the wall inside surface of the drilling nozzle (20', 111) being reinforced by the supporting bush (100) and, optionally, by the threaded sleeve (40) (Figs 15, 16).

19. A drilling device according to one or more of claims 14 to 18, characterised in that the clear width (105) of the supporting bush (100) is less than the inside width (109) of the threaded sleeve (40) (Figs 15, 16).

20. A drilling device according to one or more of claims 1 to 19, characterised in that the axis (17) of the drilling nozzle (111) runs at an acute angle (18) to the axis (16) of the branch nozzle (112) and - after attachment of the housing (110) to the pipe (15) - both nozzle axes (16, 17) are fundamentally arranged in an axial plane generated by the pipe (15) to be drilled (Fig. 16).

21. A drilling device according to claim 20, characterised in that - when the housing (110) is attached - the axial plane with the two nozzle axes (16, 17) runs fundamentally horizontal and the drilling nozzle (111) as well as branch nozzles (112) essentially lie at the same level beside the pipe (15) to be drilled.

22. A drilling device according to claim 20 or 21, characterised in that the axis (16) of the branch nozzle (112) runs fundamentally vertical and the axis (17) of the drilling nozzle (111) runs inclined to the longitudinal axis (126) of the pipe (15) to be drilled.

23. A drilling device according to one or more of claims 1 to 22, characterised in that the drilling tool (30) has, at the transition point between its head (31) which is provided with external thread and its cylindrical circumferential surface (34), a preferably conically tapered shoulder (96) for which a mating shoulder (97) serving as a stop is provided on the single-piece metallic insert (40) for the drilling nozzle.

24. A drilling device according to claim 23, characterised in that the mating shoulder (97) of a tapered transition is arranged between the threaded section (40") and the supporting bush section (100') of the metallic insert (40) of the drilling nozzle and preferably has a mating conical form.

25. A drilling device according to one or more of claims 1 to 24, characterised in that the drilling tool (30) has, in its interior, a space increasingly tapering inwards which serves as an effective sealing receptacle of the drilling core (14').

26. A drilling device according to one or more of claims 1 to 24, characterised in that, in the interior of the hollow cylindrical drilling tool (30), an inside wall (95) is provided as a block for the pressure medium and/or the drilling core (14') accommodated in the interior.

## Revendications

1. Robinetterie rapportée montée par perçage (90) pour des conduites d'alimentation (15) en matière plastique, de préférence sous une pression de fluide,
avec un corps (10), à positionner sur l'emplacement (14) à percer de la conduite (15), avec un tube vertical (11) et un tube de départ (12),
le tube vertical étant pourvu d'un filetage intérieur (41) et présentant dans la zone de son extrémité inférieure, tournée vers la conduite, un emplacement (42) d'étanchéité de valve (42),
et avec un outil de perçage (30) cylindrique, susceptible d'être vissé dans le filetage intérieur (41) du tube vertical (11) et comportant un logement (51) destiné à une poignée de rotation (91) et un emplacement d'étanchéité conjugué de valve (32),
caractérisée en ce qu'à la robinetterie rapportée montée par perçage (90) est associé, d'une part, un chapeau de robinetterie ou de valve (70) prémonté,
constitué d'un capuchon (20) avec une brochou de valve prémontée (21), montée à rotation (64) de façon axialement fixe à l'intérieur du capuchon et susceptible d'être actionnée en rotation depuis l'extérieur (58, 58'),
le capuchon (20) étant susceptible d'être fixé, à titre de corps supérieur, sur le corps (10) faisant fonction de corps inférieur, de la robinetterie rapportée montée par perçage (90) et celui-ci se déplaçant dans une robinetterie rapportée montée par perçage formant valve (90') équipée d'un corps de valve constitué du corps inférieur et du corps supérieur (10, 20),
et en ce qu'à la robinetterie rapportée montée par perçage (90) et au chapeau de valve (70) est associé, d'autre part, un adaptateur (22),
qui est précisément enfilé conjointement, de façon assujettie en rotation, mais déplaçable longitudinalement, sur la broche (21) du chapeau de valve (70) et comporte un accouplement (52) transmettant un couple, désolidarisable, et complémentaire par rapport à un logement (51) ménagé dans l'outil de perçage (30).

2. Robinetterie rapportée montée par perçage selon la revendication 1, caractérisée en ce que l'adaptateur (22), d'une part, et l'outil de perçage (30) d'autre part, comportent les deux demi-fermetures complémentaires (61, 62) d'une fermeture à encliquetage (60) (figure 4).

3. Robinetterie rapportée montée par perçage selon les revendications 1 et 2, caractérisée en ce que tant l'accouplement (52) de l'adaptateur(22), et le logement (51) de l'outil de perçage (30), qu'également les deux moitiés de fermeture (61, 62) de la fermeture à encliquetage (60), sont susceptibles d'être mis en contact par un déplacement d'enfichage axial (53) et sont susceptibles d'être désolidarisés les uns des autres par un déplacement d'extraction axial (53') (figure 4).

4. Robinetterie rapportée montée par perçage selon l'une ou plusieurs des revendications 1 à 3, caractérisée en ce qu'entre la broche (21) et l'adaptateur (22) sont disposées des butées d'extrémité (25, 26) qui limitent la course d'extraction axiale maximale, l'adaptateur (22) constituant avec le chapeau de robinetterie (70) une unité de composant prémontée, imperdable (figure 3).

5. Robinetterie rapportée montée par perçage selon l'une ou plusieurs des revendications 1 à 4, caractérisée en ce que le corps inférieur et le corps supérieur (10, 20) de la robinetterie rapportée montée par perçage formant valve, tout comme le tube vertical (11), le tube de départ (12), le capuchon (20) et une partie de bride (13), portant le tube vertical (11) et susceptible d'être fixée sur la conduite à percer, sont réalisés en une matière plastique.

6. Robinetterie rapportée montée par perçage selon l'une ou plusieurs des revendications 1 à 5, caractérisée en ce que l'emplacement d'étanchéité de valve (42), ménagé sur le tube vertical (11), est constitué d'un siège de valve et l'emplacement d'étanchéité conjugué de valve (32), ménagé sur l'outil de perçage (30), est constitué d'un disque de valve (figure 6).

7. Robinetterie rapportée montée par perçage selon l'une ou plusieurs des revendications 1 à 5, caractérisée en ce que l'emplacement d'étanchéité de valve (42) est constitué d'au moins un joint tonique élastique monté dans le tube vertical (11) et l'emplacement conjugué d'étanchéité de valve (32) est constitué par la surface périphérique (34) cylindrique de l'outil de perçage (30).

8. Robinetterie rapportée montée par perçage selon la revendication 7, caractérisée en ce que le joint torique est constitué d'une livre réalisée monobloc à partir du matériau plastique du tube vertical (11).

9. Robinetterie rapportée montée par perçage selon l'une ou plusieurs des revendications 1 à 8, caractérisée en ce que la broche est constituée d'un arbre (21) à profil d'arbre (23) non rond, et l'adaptateur est constitué d'une douille (22) enveloppant la broche et ayant une section d'ouverture transversale (24) non ronde (figures 3, 22).

10. Robinetterie rapportée montée par perçage selon l'une ou plusieurs des revendications 1 à 9, caractérisée en ce qu'au moins l'une des surfaces d'entraînement en rotation (84), située entre la broche (21) et l'adaptateur (22), est réalisée de façon à être déformable élastiquement (81') et constitue un blocage en cas de surcharge en rotation (80) (figures 11 à 13).

11. Robinetterie rapportée montée par perçage selon la revendication 10, caractérisée en ce que le blocage en cas de surcharge (80) est constitué d'au moins une plaque élastique (81) déformable élastiquement, dont les deux extrémités de plaque (82) sont logées à l'intérieur de la section transversale d'ouverture (24) de l'adaptateur (22),
tandis que la tige présente une section transversale de tige rigide,
et la section transversale d'ouverture (24) de l'adaptateur (22) présente, sur le côté opposé à la broche (21) de la plaque élastique (81), un évidement radial (76) (figures 11 à 13).

12. Robinetterie rapportée montée par perçage selon l'une ou plusieurs des revendications 2 à 11, caractérisée en ce qu'une moitié de fermeture, appartenant à la fermeture à encliquetage (60), est constituée d'un évidement (61) doté d'une contre-dépouille radiale et ménagé dans l'outil de perçage (30), évidement dans le prolongement axial duquel est disposé le logement (51) à profil non rond,
tandis que l'autre moitié de fermeture, appartenant à la fermeture à encliquetage (60), est constituée d'un anneau élastique (62) disposé dans une gorge périphérique (63) de l'adaptateur (22), anneau élastique dans le prolongement axial duquel est disposé l'accouplement (52) à profil non rond (figures 4, 5).

13. Robinetterie rapportée montée par perçage selon l'une ou plusieurs des revendications 1 à 12, caractérisée en ce que le tube de départ (12) s'étend sous un angle d'inclinaison (18) par rapport à l'axe (16) du tube vertical (11) et les deux axes (16, 17) sont disposés dans un plan axial déterminé par l'axe de la conduite à percer (15).

14. Robinetterie rapportée montée par perçage selon l'une ou plusieurs des revendications 1 à 13,
caractérisée
en ce que le corps (10") présente, dans une tubulure de perçage (20', 111), au-dessous du filetage intérieur (41), une douille d'appui (100) en matériau à rigidité de forme, assurant un guidage glissant de l'outil de perçage (30) sur la surface périphérique (34") de sa pièce de tige (21),
la douille d'appui s'étendant dans la zone de l'ouverture intérieure (106, 115) de la tubulure de perçage (20', 111) et renforçant cette zone,
en ce que la douille d'appui (100) présente un perçage latéral qui détermine l'ouverture d'embouchure (43, 114) de la tubulure de ramification (12', 112),
et en ce que la douille d'appui (100) présente, des deux côtés d'embouchure (43, 114) de la tubulure de ramification (12',112), chaque fois un logement annulaire (101, 103; 101, 120), pour deux bagues d'étanchéité (102, 104; 102,116) (figures 15, 16).

15. Robinetterie rapportée montée par perçage selon la revendication 14, caractérisée en ce que le filetage intérieur (41), destiné au vissage de l'outil de perçage (30), est constitué directement par le matériau de la paroi de la tubulure de perçage (20', 111) (figures 15, 16).

16. Robinetterie rapportée montée par perçage selon la revendication 14, caractérisée en ce que le filetage intérieur (41), destiné au vissage de l'outil de perçage (30), est constitué par une douille (douille à intérieur) en un matériau à rigidité de forme, douille disposée au-dessus de la douille d'appui (100) et constituant un tronçon de la surface intérieure de paroi de la tubulure de perçage (20', 111) (figures 15, 16).

17. Robinetterie rapportée montée par perçage selon la revendication 15 ou 16, caractérisée en ce que la douille à filetage (40") est réalisée monobloc avec la douille d'appui (100') (figures 19, 20).

18. Robinetterie rapportée montée par perçage selon l'une ou plusieurs des revendications 14 à 17, caractérisée en ce que le corps (10", 110) de la robinetterie rapportée montée par perçage est produite sous forme de pièce moulée sous pression en matière plastique, la surface intérieure de paroi de la tubulure de perçage (20', 111) étant renforcée par la douille d'appui (100) et, le cas échéant, par la douille filetée (40) (figures 15, 16).

19. Robinetterie rapportée montée par perçage selon l'une ou plusieurs des revendications 14 à 18, caractérisée en ce que l'ouverture libre (105) de la douille d'appui (100) est inférieure à l'ouverture intérieure (109) de la douille filetée (40) (figures 15, 16).

20. Robinetterie rapportée montée par perçage selon l'une ou plusieurs des revendications 1 à 19, caractérisée en ce que l'axe (17), passant par la tubulure de perçage (111), s'étend sous un angle aigu (18) par rapport à l'axe (16) de la tubulure de ramification (112) et - après fixation du corps (110) sur le tube (15) - les deux axes de tubulure (16, 17) sont disposés sensiblement dans un plan axial passant par le tube (15) à percer (figure 16).

21. Robinetterie rapportée montée par perçage selon la revendication 20, caractérisée en ce que - en observant dans le cas où le corps (110) est fixé - le plan axial comportant les deux axes de tubulure (16, 17) s'étend de façon sensiblement horizontale et la tubulure de perçage (111) ainsi que la tubulure de ramification (112) sont situées sensiblement à la même hauteur l'une par rapport à l'autre, à côté du tube (15) à percer.

22. Robinetterie rapportée montée par perçage selon la revendication 20 ou 21, caractérisée en ce que l'axe (16) de la tubulure de ramification (112) s'étend sensiblement verticalement et l'axe (17) de la tubulure de perçage (111) s'étend de façon inclinée par rapport à l'axe longitudinal (126) du tube (15) à percer.

23. Robinetterie rapportée montée par perçage selon l'une ou plusieurs des revendications 1 à 22, caractérisée en ce que l'outil de perçage (30) comporte, au point de transition entre sa tête (31) pourvue du filetage extérieur, et sa surface périphérique cylindrique (34), un épaulement (96) qui, de préférence, est diminué de façon conique et en ce qu'un contre-épaulement (97) servant de butée est prévu sur l'insert métallique (40) monobloc destiné à la tubulure de perçage.

24. Robinetterie rapportée montée par perçage selon la revendication 23, caractérisée en ce que le contre-épaulement (97) est constitué d'une transition conique entre le tronçon fileté (40") et le tronçon de douille d'appui (100') de l'insert métallique (40) de la tubulure de perçage et présente de préférence une contre-conicité.

25. Robinetterie rapportée montée par perçage selon l'une ou plusieurs des revendications 1 à 24, caractérisée en ce que l'outil de perçage (30) présente intérieurement un espace allant en rétrécissant en direction de l'intérieur et servant à recevoir de façon efficace sur le plan de l'étanchéité le noyau de perçage (14').

26. Robinetterie rapportée montée par perçage selon l'une ou plusieurs des revendications 1 à 24, caractérisée en ce qu'à l'intérieur de l'outil de perçage (30) cylindrique creux, est prévue une paroi intérieure (95) servant de barrière pour le fluide sous pression et/ou pour le noyau de perçage (14') reçu à l'intérieur.
